# FASCICULE DE BREVET EUROPEEN

(11) **EP 3 384 635 B1**
(45) Date de publication et mention de la délivrance du brevet: **15.07.2020**
(21) Numéro de dépôt: 16815886.3
(22) Date de dépôt: 25.11.2016
(51) Int. Cl.: H04L 12/28

(54) **PROCÉDÉ DE CONFIGURATION, DE CONTRÔLE OU DE SUPERVISION D'UNE INSTALLATION DOMOTIQUE**
VERFAHREN ZUR KONFIGURATION, STEUERUNG ODER ÜBERWACHUNG EINER HEIMAUTOMATIONSANLAGE
METHOD FOR CONFIGURING, CONTROLLING OR MONITORING HOME AUTOMATION EQUIPMENT

(30) Priorité: 03.12.2015 FR 1561771
(43) Date de publication de la demande: 10.10.2018
(73) Titulaire: Overkiz, 74370 Metz-Tessi (FR)
(72) Inventeur: POGNANT, Sylvain, 74600 Seynod (FR)
(74) Mandataire: Verriest, Philippe
(86) Numéro de dépôt international: PCT/FR2016/053096
(87) Numéro de publication internationale: WO 2017/093641

(56) Documents cités:
- WO-A1-2014/198782
- US-A1- 2013 086 700
- US-A1- 2014 230 018
- US-A1- 2014 282 048

## Description

### Domaine de l'invention

La présente invention concerne un procédé de configuration et un procédé de contrôle ou de supervision d'une installation domotique.

### Art antérieur

Une installation domotique d'un bâtiment connue comme par exemple du brevet publié sous le numéro US2014/0230018, peut comprendre une pluralité de dispositifs domotiques. Il est connu de procéder à la configuration, et au contrôle, c'est à dire à la commande et/ou à la supervision de ladite installation en utilisant une unité centrale de commande qui communique avec un ou plusieurs dispositifs domotiques.

Ces différentes opérations peuvent être réalisées par un utilisateur principal, par exemple par un propriétaire de l'installation. D'autres utilisateurs peuvent toutefois également avoir accès à l'installation. Il est souhaitable dans ce cas de pouvoir bloquer ou restreindre l'accès à des types d'utilisateurs particuliers. Des solutions connues consistent à accéder à un mode invité défini sur les dispositifs domotiques, sur la base d'une identification de l'utilisateur par le dispositif domotique, pour déterminer s'il s'agît d'un invité ou de l'utilisateur titulaire du compte, et choisir en conséquence le type de fonctionnement à appliquer. La détection peut être réalisée par l'intermédiaire d'une interface utilisateur, de détecteurs biométriques, de détecteurs RFID ou encore de lecteurs de QR-codes.

Ces dispositions occasionnent une plus grande complexité et un surcoût pour la fabrication des dispositifs, nécessitent une intervention sur chaque dispositif pour le paramétrage du mode "invité", et rendent donc difficile le paramétrage des accès et l'administration de ceux-ci. De plus la gestion multi-comptes multi-utilisateur n'est pas prévue.

La présente invention a pour but de résoudre tout ou partie des inconvénients mentionnés ci-dessus.

### Exposé de l'invention

A cet effet, la présente invention concerne un procédé de configuration d'une installation domotique suivant la revendication 1.

Selon un aspect de l'invention, après une étape de création d'un nouvel profil utilisateur, celui-ci est enregistré dans le référentiel d'utilisateurs.

Selon un aspect de l'invention, après une étape de création d'une nouvelle entité représentative, celle-ci est enregistrée dans le référentiel d'entités représentatives.

Selon un aspect de l'invention, après une étape de création d'une nouvelle association, celle-ci est enregistré dans le référentiel d'associations.

Au sens de la présente invention, un dispositif domotique est un équipement domotique et/ou un capteur, ou encore une partie d'équipement domotique ou une partie de capteur correspondant à un sous-ensemble fonctionnel.

Au sens de la présente invention, un message est un élément d'information notifié ou réceptionné via un module de communication depuis un équipement extérieur, ou sous la forme d'un appel synchrone ou asynchrone, pouvant également correspondre à un appel de fonction local ou distant.

Au sens de la présente invention, une installation est un ensemble comprenant une pluralité de dispositifs domotiques et au moins une unité centrale de commande disposés dans un seul bâtiment ou sur une pluralité de lieux, chaque dispositif domotique étant relié à une unité centrale de commande parmi la pluralité d'unités centrales de commande, la pluralité d'unités centrales de commande formant un groupe sous le contrôle d'un utilisateur. Les dispositifs électroniques forment des groupes d'au moins un dispositif domotique rattaché à une unité centrale de commande.

Au sens de la présente invention, une unité centrale de commande de l'installation domotique est une unité électronique comprenant :
- au moins une unité de traitement pour contenir et exécuter au moins un programme d'ordinateur,
- au moins un module de communication destinée au contrôle et/ou à la commande d'au moins un dispositif domotique ; alternativement l'unité électronique peut être intégrée à un dispositif domotique ; et
- au moins un module de communication avec l'unité de gestion.

Dans certaines applications, une unité centrale de commande peut communiquer avec l'unité de gestion à travers une unité de gestion intermédiaire, par exemple d'un fournisseur de service tiers, dont l'unité de gestion intermédiaire offre une interface de service ou API.

Il est également possible que l'unité centrale de commande soit intégrée à un routeur et/ou à un modem réalisant une connexion à un réseau étendu, notamment à Internet.

Selon un aspect de l'invention, l'unité de gestion est un serveur connecté à distance à l'au moins une installation domotique, par l'intermédiaire d'un réseau étendu. Il est à noter que le terme serveur est une désignation logique qui peut recouvrir l'utilisation de plusieurs serveurs physiques pour répartir la charge de traitement informatique à réaliser.

Selon un autre aspect de l'invention, l'unité de gestion est une unité centrale destinée à être reliée à une ou plusieurs unités centrales de commande sur des réseaux privés ou locaux distincts, ou encore sur le même réseau local.

Au sens de la présente invention, une entité représentative est une structure de données qui représente un dispositif domotique, un groupe de dispositif domotiques ou une installation comprenant une ou plusieurs unités centrales de commandes, cette entité étant destinée à être associée à un utilisateur, l'association ainsi formée étant rattachée à au moins un attribut d'accès.

Des attributs d'accès sont définis pour chaque association entre une entité représentative et un utilisateur. Les attributs d'accès peuvent être définis soit de façon uniforme pour l'ensemble des dispositifs rattachés à une association, soit de façon différenciée pour les différents dispositifs, dans le cas où l'association correspond à plusieurs dispositifs, en utilisant par exemple une liste d'attributs. Par ailleurs, il est possible de définir des types d'attributs d'accès prédéterminés, par exemple « propriétaire » ou « invité ». Dans ce cas, le message de configuration n'a pas besoin de contenir une liste exhaustive des attributs d'accès pour chaque dispositif. Seule une référence au type de profil de droits d'accès prédéfini « invité » peut être présente. Les attributs d'accès peuvent être ensuite déduits à partir du type de profil.

Les dispositions selon l'invention permettent une connexion des dispositifs, via une ou plusieurs unités centrales de commande, à une unité de gestion, notamment à un serveur, et une gestion des paramètres de fonctionnement des dispositifs et des filtres d'accès aux fonctionnalités des dispositifs sur l'unité de gestion ou sur l'unité centrale de commande.

Grâce aux dispositions selon l'invention, il est possible de gérer des configurations « multicomptes », c'est-à-dire des configurations dans laquelle plusieurs utilisateurs ont des droits d'accès définis par des attributs d'accès différents de manière transparente pour les dispositifs domotiques et les unités centrales de commande. Ainsi, lors de l'enregistrement des dispositifs, groupes de dispositifs ou installations, Les structures de données sont prévues pour permettre ultérieurement les configurations « multicomptes », même si chaque enregistrement ne correspond pas à une telle configuration.

Ainsi, des dispositifs qui ne sont pas prévus pour détecter le type d'utilisateur, peuvent fonctionner tout de même selon des modes de fonctionnement différents en fonction du type d'attribut attaché à l'utilisateur, par exemple en mode "invité" ou propriétaire.

Les liens ou associations entre utilisateurs et entités représentatives peuvent être représentés dans une table de relation indépendante afin de pouvoir décrire tout type de relation, selon un type de lien dit « n-n ». Ainsi un utilisateur peut être mis en relation avec plusieurs entités représentatives et réciproquement.

En effet, un utilisateur est susceptible de contrôler plusieurs dispositifs, groupes de dispositifs ou installations différents et un dispositif, groupe de dispositifs ou une installation peut être accédé par différents utilisateurs.

A titre d'exemple, une configuration « multicomptes » peut correspondre à un utilisateur lié à un ou plusieurs dispositifs ou installations, en particulier dans le cas où un utilisateur est propriétaire de plusieurs installations. L'utilisateur qui possède plusieurs installations et veut pouvoir les piloter à distance avec un seul compte utilisateur, notamment afin d'éviter d'avoir plusieurs noms d'utilisateur ou mots de passe à retenir. Un cas typique correspondant à cet exemple est un utilisateur possédant une résidence principale et secondaire. Dans ce cas, l'utilisateur possède une relation avec chacune des installations, avec un attribut indicateur de propriété.

Selon un second exemple, un dispositif est lié à deux associations entre une installation et un utilisateur. Les deux comptes peuvent être actifs en même temps. Un partage d'accès à l'installation peut être considéré. Ainsi, un utilisateur veut donner un accès, limité ou non à d'autres personnes sur une installation dont il est propriétaire. Un cas typique correspondant à cet exemple est la création de comptes secondaires pour les membres de la famille. Dans ce cas, l'utilisateur principal créé des comptes secondaires qu'il met en relation avec son installation, avec un profil d'accès restreint si nécessaire.

Un autre exemple correspond à une installation domotique qui, dans son ensemble, est sous le contrôle d'un utilisateur propriétaire. Tous les dispositifs appartenant à cette installation sont accessibles avec des attributs d'accès correspondant à un profil « propriétaire » par cet utilisateur, selon une première association. Un équipement appartenant physiquement à cette installation domotique, par exemple un équipement de chauffage est accessible en mode « maintenance » pour un deuxième utilisateur, par exemple le fournisseur du dispositif ou un installateur spécialisé, par l'intermédiaire d'une seconde association.

Dans le cas particulier où la personne qu'il veut autoriser possède déjà un compte sur la plate-forme de gestion, un lien peut être créé directement entre cet utilisateur et l'installation, sans nécessité de créer un nouveau compte.

Les informations concernant les identifiants de l'installation et de l'utilisateur peuvent être explicites, par exemple contenues dans le message de configuration. Ces informations peuvent être alternativement implicites, par exemple en identifiant l'adresse IP source du message pour une unité centrale de commande afin de définir l'identifiant de l'installation si cette installation comprend une seule unité centrale de commande, ou par référence à un identifiant d'installation ou à une autre unité centrale de commande dans le cas ou l'installation comprend plusieurs unités centrales de commande. De la même façon, une connexion avec le terminal peut être conditionnée à la saisie d'un login et d'un mot de passe, ou d'un code PIN qui permet d'identifier l'utilisateur.

Selon un aspect de l'invention, le procédé comprend une première étape de création d'une première association entre au moins un premier profil utilisateur et au moins une première entité représentative d'au moins un dispositif, au moins un premier attribut d'accès étant rattaché à ladite première association et une deuxième étape de création d'une deuxième association entre au moins un second utilisateur et la première entité représentative ou une deuxième entité représentative comprenant au moins un dispositif en commun avec la première entité représentative ; au moins un second attribut d'accès étant rattaché à ladite deuxième association.

Selon un aspect de l'invention, la deuxième entité représentative peut être confondue avec la première ou distincte.

Selon un aspect de l'invention, une période de validité est rattachée à la deuxième association, l'au moins un second attribut d'accès définit un droit d'accès non-exclusif d'accès au second utilisateur sur ledit dispositif commun pendant la période de validité, et l'au moins un premier attribut d'accès définit un accès non-exclusif pour le premier utilisateur pendant la période de validité.

Ces dispositions définissent un partage d'accès temporaire. La relation entre un utilisateur et une installation peut porter une ou plusieurs plages de validité temporelle. Dans ce cas, l'accès à l'installation n'est possible que dans les plages horaires spécifiées. Un cas typique correspondant à cette configuration est un accès limité dans le temps ou sur des heures ouvrables. Alternativement ou en complément, la durée de validité peut être définie entre une date de début et une date de fin.

Selon un aspect de l'invention, une période de validité est rattachée à la deuxième association, l'au moins un second attribut d'accès définit un droit d'accès exclusif d'accès au second utilisateur sur ledit dispositif commun pendant la période de validité, l'au moins un premier attribut d'accès correspondant à une interdiction d'accès pour le premier utilisateur pendant la période de validité.

Ces dispositions définissent une délégation temporaire. Il s'agit d'un cas dans lequel un utilisateur décide de fournir temporairement un accès à son installation à un autre utilisateur, tout en désactivant son propre accès à cette installation durant la même période. Un cas typique correspondant à cette configuration est la location de bien immobilier.

Selon un aspect de l'invention, l'au moins un attribut d'accès comprend au moins un des éléments suivants :
- Un indicateur de propriété ;
- Un libellé d'installation ;
- Un profil de droits d'accès ; ou
- Un indicateur d'installation par défaut.

L'indicateur de propriété permet d'indiquer que cette installation a été enregistrée par l'utilisateur associé. C'est habituellement l'utilisateur qui a déclaré/créé l'installation.

L'utilisateur propriétaire est considéré comme l'utilisateur principal de l'installation. A ce titre il dispose d'un statut particulier lui permettant d'accéder à certaines opérations comme :
- Une résiliation complète,
- L'ajout/suppression d'utilisateurs secondaires sur son installation,
- ajout/suppression d'une association entre l'utilisateur et l'entité représentative.

Le libellé d'installation permet à l'utilisateur de personnaliser le nom de chaque installation à laquelle il a accès. A titre d'exemple, les libellés peuvent être « Résidence principale », « Résidence secondaire » ou même « Maison du voisin ».

Ces dispositions permettent de différencier les installations lorsque l'utilisateur possède des droits d'accès sur plusieurs installations. Lors de l'utilisation d'une interface homme-machine, par exemple, l'utilisateur peut être amené à choisir l'installation qu'il veut contrôler à partir d'une liste de libellés. Alternativement, le libellé peut comprendre ou être constitué par un signe de reconnaissance, par exemple une icône ou une image.

Lorsqu'un utilisateur est associé à une installation, un profil de droit d'accès peut lui être assigné, générique ou personnalisé.

Ce profil de droit d'accès définit les droits d'accès aux produits de l'installation, c'est à dire :
- La possibilité de voir les caractéristiques d'un dispositif domotique, les valeurs de ses variables d'états ou d'une sous partie de ses variables d'état.
- La possibilité de piloter un dispositif ou une sous partie de ses fonctions.

Selon un aspect de l'invention, le profil de droits d'accès correspond à un profil de droit d'accès prédéfini et/ou à une liste de droits d'accès sur des dispositifs ou des groupes de dispositifs rattachés à une entité représentative.

Il est ainsi possible de régler finement la visibilité et le pilotage des dispositifs domotiques.

L'utilisateur principal de l'installation possède typiquement un profil de droits d'accès offrant un accès total et sans restriction. Les autres utilisateurs associés à la même entité représentative, par exemple dans le cercle familial ou dans le voisinage, peuvent par contre faire l'objet de filtres afin de réduire leurs droits d'accès aux dispositifs de l'installation. A titre d'exemple, ils peuvent avoir accès à une consultation seulement, ou au pilotage d'un produit ou d'une fonction en particulier.

Une relation entre un utilisateur et une installation peut être déclarée « par défaut ». Dans le cas où l'accès à une interface homme-machine nécessite la sélection d'une installation, cet indicateur permet d'éviter à l'utilisateur de devoir choisir son installation en en présélectionnant une au départ. L'utilisateur peut changer l'installation en cours par la suite.

Selon un aspect de l'invention, le procédé comprend en outre les étapes suivantes :
- Envoi d'au moins un message de distribution concernant la création ou la mise à jour de l'au moins une association à destination d'au moins une unité centrale de commande appartenant à l'installation correspondant à l'entité représentative d'au moins un dispositif concerné par l'association.

Ces dispositions permettent de prévoir un contrôle d'accès sur la base des attributs d'accès en local sur l'unité centrale de commande.

Grâce à ces dispositions, un utilisateur « invité » peut utiliser un terminal utilisateur comme point de commande. Le terminal utilisateur peut notamment communiquer avec l'unité centrale de commande selon un protocole ouvert par exemple de type Wifi, Bluetooth, Zigbee. L'unité de contrôle peut appliquer des filtres d'accès et communiquer avec les dispositifs domotiques selon un protocole propriétaire. Dans ce cas, l'unité centrale de commande peut identifier l'utilisateur grâce à son terminal utilisateur, mais les dispositifs domotique n'ont pas besoin de connaître l'utilisateur.

Selon une possibilité, le même utilisateur « invité » peut utiliser des points de commande propriétaires, par exemple de type télécommande. Cette utilisation peut être limitée ou interdite par l'unité centrale de commande ou à l'initiative de l'unité de gestion, qui peut envoyer un message de blocage aux dispositifs domotiques.

Un exemple d'utilisation est une délégation temporaire d'utilisation. Les dispositifs reçoivent des commandes émises par les télécommandes propriétaires et peuvent exécuter ou non celle-ci en fonction des messages de blocage reçus. Il n'est pas nécessaire que les dispositifs domotiques ou même l'unité de gestion soient capables d'identifier l'utilisateur.

Selon un aspect de l'invention, le procédé de configuration comprend en outre les étapes suivantes :
- Détermination d'une configuration d'affichage concernant au moins une commande sur au moins un dispositif domotique pouvant être déclenchée par un utilisateur et/ou au moins une variable d'état d'un dispositif domotique pouvant être visualisée par un utilisateur en fonction de l'au moins un attribut d'accès.
- Envoi d'au moins un message de configuration d'affichage concernant ladite configuration d'affichage à destination d'un terminal utilisateur.

Ces dispositions permettent de prévoir un affichage adapté aux attributs d'accès d'un utilisateur.

Selon un aspect de l'invention, le procédé de configuration comprend les étapes suivantes :
- Réception d'un premier message de demande d'enregistrement d'une première unité centrale de commande pour l'installation émise par une première unité centrale de commande, ou alternativement par un terminal utilisateur, en lien avec une première information d'identification.
- Obtention d'une première information de rattachement de la première unité centrale de commande à une entité représentative d'au moins un dispositif domotique correspondant à une entité représentative d'au moins une installation domotique.
- Si la première information de rattachement correspond à une absence de rattachement de l'unité centrale de commande à une installation précédemment enregistrée, création d'une entité représentative de l'installation et rattachement de la première unité centrale de commande à ladite entité représentative.

Selon une possibilité, le premier message d'enregistrement est confondu avec le message de configuration. Selon une possibilité, l'étape d'obtention peut être réalisée simultanément avec l'étape de sélection ou de création d'une entité représentative.

Selon un aspect de l'invention, le procédé de configuration comprend les étapes suivantes :
- Réception d'un deuxième message de demande d'enregistrement d'une seconde unité centrale de commande pour l'installation, émise par la deuxième unité centrale de commande, ou alternativement par un terminal utilisateur, en lien avec une deuxième information d'identification (IID2).
- Obtention d'une seconde information de rattachement de la deuxième unité centrale de commande à une entité représentative d'une installation domotique.
- Dans le cas où la seconde information de rattachement correspond à un rattachement à une entité représentative d'une installation comprenant la première unité centrale de commande est présente, rattachement de la seconde unité centrale à une entité représentative de l'installation à laquelle est également rattachée la première unité centrale de commande.

Selon un aspect de l'invention, le procédé de configuration comprend les étapes suivantes :
- Réception d'un message d'enregistrement en provenance d'un terminal utilisateur comprenant un identifiant d'une l'installation et au moins un identifiant d'une unité centrale de commande ;
- Création ou mise à jour d'une entité représentative de l'installation correspondant à l'identifiant de l'installation, entité représentative étant associée à un groupe comprenant l'au moins un identifiant d'une unité centrale de commande.

Selon un aspect de l'invention, le procédé de configuration comprend en outre l'étape suivante :
- Réception d'un message de description de topologie en provenance d'un terminal utilisateur comprenant une description ou une mise à jour d'une description d'un groupe de dispositifs rattaché à l'identifiant de l'installation ; et
- Rattachement à l'entité représentative de l'installation domotique du groupe de dispositifs rattaché à l'identifiant de l'installation.

Selon une possibilité, le message de description de topologie peut être confondu avec le message de configuration.

Selon un aspect de l'invention, le procédé de configuration comprend les étapes suivantes :
- Réception d'un message de description de topologie en provenance d'une unité centrale de commande rattachée à l'identifiant de l'installation comprenant une description ou une mise à jour d'une description d'un groupe de dispositifs rattaché à ladite unité centrale de commande ; et
- Mise à jour d'un groupe de dispositifs rattaché à l'entité représentative sur la base de la description ou de la mise à jour d'une description du groupe de dispositifs rattaché à ladite unité centrale de commande.

La présente invention concerne également un procédé de contrôle d'une installation domotique suivant la revendication 9.

Selon une possibilité, le déclenchement de l'action est réalisée de façon directe par envoi d'une commande à un dispositif, si c'est l'unité centrale de commande qui exécute le procédé; ou indirectement, par envoi à l'unité centrale à laquelle est rattachée le dispositif, si c'est l'unité de gestion qui exécute le procédé.

Dans le cas d'exécution par une unité centrale de commande, les dispositions selon l'invention permettent de réduire la charge de calcul coté unité de gestion. Les associations entre les entités représentatives et les profils utilisateurs et les attributs respectifs doivent préalablement être transmis par l'unité de gestion à l'unité centrale de commande.

Selon un aspect de l'invention, dans le cas où l'action n'est pas déclenchée, un message d'erreur peut être retourné au terminal utilisateur ou à l'application.

Selon un aspect de l'invention, des paramètres de l'action peuvent être modifiés en fonction de l'au moins un attribut d'accès avant déclenchement de l'action.

Par action, il peut être compris exécution d'au moins un commande; ou encore déclenchement d'un scénario ou d'un groupe de commandes communiquées préalablement à l'unité centrale de commande et identifié par un identifiant de groupe de commande ou de scénario ; dans ce cas, le message correspondant contient cet identifiant.

Le déclenchement de l'action peut être direct par l'unité centrale de commande) ou indirect, par envoi d'un message de notification ou de commande à destination de l'unité de gestion ou d'une autre unité centrale de commande.

Selon une autre possibilité, une action peut correspondre à un message à destination d'un terminal utilisateur concernant au moins une variable d'état ou une configuration d'affichage concernant les commandes pouvant être déclenchées.

Selon une autre possibilité, une action peut correspondre à une mise à jour de données par l'unité de gestion.

On entend par scénario un ensemble de commandes comprenant au moins une commande destiné à au moins un dispositif domotique, ledit ensemble étant préenregistré dans au moins une unité centrale de commande, le scénario pouvant être déclenché sur la base d'une commande de l'utilisateur, d'un évènement déclenché par la réalisation d'une condition sur le temps et/ou la date, ou encore d'une condition sur une variable d'état d'un dispositif domotique qui peut notamment être une mesure de capteur ou une variable d'état d'un dispositif domotique. Un scénario peut être identifié par un identifiant de scénario.

On entend par commande groupée ou groupe de commande un ensemble de commandes comprenant une pluralité de commandes destiné à un ou plusieurs dispositifs domotiques, la pluralité de commande étant destiné à être envoyé à au moins une unité centrale de commande pour une exécution à réception.

Selon un aspect de l'invention, l'étape de réception d'au moins un message de contrôle correspond à une demande de réalisation d'une commande, d'une commande ou groupée ou du déclenchement d'un scénario en provenance d'un terminal utilisateur.

Selon un aspect de l'invention, l'étape de réception d'au moins un message de contrôle correspond à une connexion du terminal utilisateur à l'unité de gestion ou à la réception d'une indication qu'une connexion avec le terminal utilisateur est établie ou à une demande de mise à jour par le terminal utilisateur ; et l'action à réaliser correspond à l'envoi au terminal utilisateur :
- d'au moins un message de configuration d'affichage concernant au moins une commande sur au moins un dispositif domotique pouvant être déclenchée par un utilisateur et/ou au moins une valeur d'une variable d'état d'un dispositif domotique pouvant être visualisée par un utilisateur en fonction de l'au moins un attribut d'accès.

Grâce à ces dispositions, le terminal utilisateur peut afficher une interface présentant à l'utilisateur les dispositifs et leurs états ou les commandes disponibles en appliquant, au niveau de l'unité de gestion, un filtre correspondant à l'au moins un attribut d'accès.

Ces dispositions correspondent à des opérations de supervision. L'au moins un message de contrôle peut déclencher l'envoi de messages par l'unité de gestion contenant des valeurs des variables d'état des dispositifs, pour une présentation des informations à l'utilisateur.

Ces dispositions correspondent à un mode de contrôle d'état ou de supervision actif, dans lequel le terminal utilisateur envoie un message correspondant à une demande explicite concernant l'état d'un ou de plusieurs dispositifs domotiques à l'unité de gestion. L'unité de gestion communique les valeurs des variables d'états en prenant en compte un filtre correspondant aux attributs d'accès associés à l'utilisateur pour le dispositif considéré.

Selon un aspect de l'invention, le procédé comprend une étape de sélection d'au moins une association par défaut pour un utilisateur connecté par l'intermédiaire du terminal utilisateur.

Ces dispositions permettent de sélectionner au moins un dispositif, un groupe de dispositif ou une installation par défaut à présenter à l'utilisateur, dans le cas où un identifiant d'utilisateur, par exemple de type login/mot de passe désigne seulement un utilisateur, mais non une association entre un utilisateur et une entité représentative d'au moins un dispositif domotique.

Selon un mode de réalisation, la sélection est réalisée sur la base de l'au moins un attribut d'accès des associations concernant l'utilisateur considéré. Selon un autre mode de réalisation, il est possible de présenter toutes les associations concernant l'utilisateur audit utilisateur, et de lui demander de choisir l'association par défaut.

La présente invention concerne également un procédé de supervision d'une installation domotique suivant la revendication 13.

Ces dispositions correspondent à un mode de supervision évènementiel, dans lequel un utilisateur est abonné à certains événements, par exemple le changement de valeurs de variables d'état. L'unité de gestion peut envoyer un message de notification lors d'un changement d'état. L'unité de gestion communique les valeurs des variables d'états en prenant en compte un filtre correspondant aux attributs d'accès associés à l'utilisateur pour le dispositif considéré.

Selon une possibilité, le procédé comprend en outre une étape de mise à jour d'une valeur de la variable d'état dans un référentiel de valeurs de variables d'état.

Selon une possibilité, le procédé comprend une étape d'aggrégation d'une pluralité de message de notification pour la détermination d'un résultat d'une commande.

Selon un aspect de l'invention, une période de validité est rattachée à l'au moins une association, l'au moins un attribut d'accès définissant un droit d'accès pendant la période de validité.

Selon un aspect de l'invention, l'au moins un attribut d'accès comprend au moins un des éléments suivants: un indicateur de propriété; un libellé d'installation ; Un profil de droits d'accès ; ou un indicateur d'installation par défaut.

Selon un aspect de l'invention, le profil de droits d'accès correspond à un profil de droit d'accès prédéfini et/ou à une liste de droits d'accès sur des dispositifs ou des groupes de dispositifs rattachés à une entité représentative.

Les différents aspects définis ci-dessus non incompatibles peuvent être combinés.

### Brève description des figures

L'invention sera mieux comprise à l'aide de la description détaillée qui est exposée ci-dessous en regard du dessin annexé dans lequel :
La figure 1 est une vue schématique d'un bâtiment et d'une installation domotique conforme à un mode de réalisation de l'invention ;
La figure 2 est un schéma présentant une architecture d'un système comprenant l'installation domotique illustrée à la figure 1, une deuxième installation domotique, ainsi qu'un serveur destiné à être connecté à un terminal utilisateur;
La figure 3a est un schéma représentant les relations entre une entité représentative d'une installation domotique, les unités centrales de commande et les dispositifs de l'installation domotique.
La figure 3b est un schéma représentant les relations entre une entité représentative d'un groupe de dispositifs et les dispositifs de l'installation domotique.
La figure 3c est un schéma représentant les relations entre une entité représentative d'un dispositif domotique et ledit dispositif de l'installation domotique.
La figure 4 est un schéma représentant les relations entre une entité représentative, un utilisateur et une association à laquelle sont rattachés des attributs.
La figure 5a représente un premier exemple de schéma de relation entre des utilisateurs et des entités représentatives.
La figure 5b représente un deuxième exemple de schéma de relation entre des utilisateurs et une entité représentative.
La figure 5c représente un troisième exemple de schéma de relation entre des utilisateurs et une entité représentative.
Les figures 6, 7 et 8 sont des schémas illustrant un premier mode de mise en œuvre d'un procédé de configuration d'une installation domotique selon l'invention.
La figure 9 est un schéma illustrant un deuxième mode de mise en œuvre d'un procédé de configuration d'une installation domotique selon l'invention.
La figure 10 est un schéma illustrant un mode de mise en œuvre d'un procédé de contrôle d'une installation domotique selon l'invention.
La figure 11 est un schéma illustrant un deuxième mode de mise en œuvre d'un procédé de contrôle d'une installation domotique selon l'invention.
La figure 12 est un schéma illustrant un troisième mode de mise en œuvre d'un procédé de contrôle d'une installation domotique selon l'invention.
La figure 13 est un schéma illustrant un mode de mise en œuvre d'un procédé de supervision d'une installation domotique selon l'invention.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

### Description d'un système comprenant une installation domotique

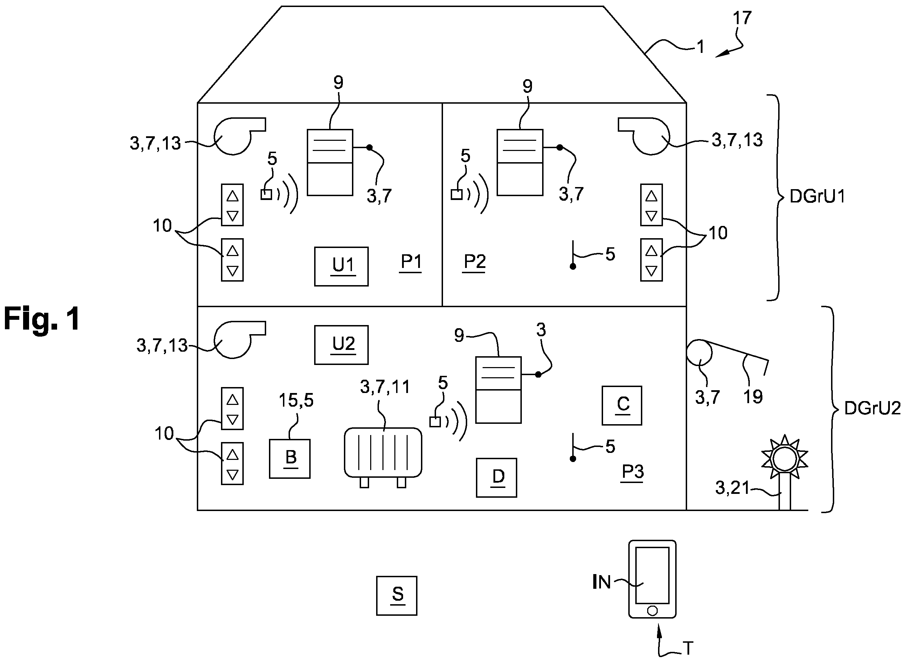

Comme illustré à la figure 1, un bâtiment 1 comprend à titre d'exemple trois pièces P1, P2, P3. Le bâtiment 1 comprend également des équipements domotiques 3 et des capteurs 5.

Un équipement domotique 3 peut être un actionneur agencé pour déplacer ou régler un élément du bâtiment 1, par exemple un actionneur 7 pour déplacer un volet roulant 9 ou un store de terrasse 19, ou un système de régulation 10 pour un chauffage 11 ou un système aéraulique 13. Un équipement domotique 3 peut également être un éclairage, par exemple un éclairage extérieur de terrasse 21 ou un système de commande d'éclairage, un système d'alarme, ou encore une caméra vidéo, en particulier une caméra de vidéosurveillance.

L'installation domotique 17 peut également comprendre un point de commande 15 d'un actionneur 7, comme un boîtier de commande B sans fil pour le volet roulant 9.

L'installation domotique 17 peut comprendre un ou plusieurs capteurs 5, de façon intégrée à un actionneur 7, à un point de commande 15 ou encore au boîtier de commande B, ou de façon indépendante à ces éléments. Un capteur 5 peut, notamment, être agencé pour mesurer une grandeur physique, par exemple un capteur de température, un capteur d'ensoleillement ou un capteur d'humidité. Des capteurs 5 de position d'équipements domotiques 3 du bâtiment 1, comme, par exemple, des capteurs de l'état d'ouverture d'un volet roulant 9 ou des capteurs de position d'un ouvrant tel une fenêtre, motorisée ou non, peuvent également être prévus. L'installation domotique peut également comprendre un ou plusieurs capteurs de présence.

Un équipement domotique 3 et un capteur 5 sont ainsi à considérer comme des unités ayant à disposition des informations sur des états réels constatés d'éléments du bâtiment 1 et étant aptes à partager ces informations avec d'autres éléments de l'installation domotique 17.

Les équipements domotiques 3 et les capteurs 5 peuvent ainsi avoir accès à toute grandeur physique mesurable, comme la température de chaque pièce P1, P2, P3 ou un état d'un élément du bâtiment 1, comme l'état d'ouverture d'un volet roulant 9, le statut d'une alarme, etc.

Par la suite nous utiliserons la désignation de dispositif domotique ou dispositif D indifféremment pour désigner des capteurs ou des équipements domotiques, ou encore des parties d'équipements domotiques 3 ou de capteurs 5.

L'installation domotique 17 comprend une pluralité d'unités centrales de commande U1, U2. En particulier et à titre d'exemple, deux unités centrales de commande U1, U2 sont représentées sur la figure 1. Selon une variante, une installation domotique peut comprendre également une unité centrale de commande unique.

Chaque unité centrale de commande U1, U2 est agencée pour commander et/ou contrôler une partie des dispositifs D de l'installation 17 formant un groupe DGrU1, DGrU2. A titre d'exemple, sur la figure 1, l'unité centrale de commande U1 est en charge des dispositifs D disposés dans les pièces P1 et P2 du premier étage du bâtiment, alors que l'unité centrale de commande U2 est en charge des dispositifs D disposés dans la pièce P3 au rez-de-chaussée du bâtiment et des dispositifs extérieurs.

En particulier, la commande et/ou le contrôle est réalisé à distance, notamment en utilisant un protocole de communication sans fil, par exemple un protocole de communication radio. Chaque unité centrale de commande U1, U2 est agencée pour regrouper l'ensemble des données en provenance des dispositifs D de son groupe DGrU1, DGrU2 et pour traiter ces données.

Les dispositifs D faisant partie d'un groupe DGrU1, DGrU2 appartiennent à un réseau local géré par une unité centrale de commande U1 ou U2 au sein de l'installation domotique et communiquent selon un protocole de communication local avec l'unité centrale de commande U1 ou U2. Ils ont une adresse locale dans ce réseau. Les dispositifs logiques D peuvent être modélisés comme des nœuds ou points d'extrémité dans le réseau local.

Le système d'adressage local peut être hiérarchique ou à plat, le format d'adresse pouvant être numérique ou alphanumérique.

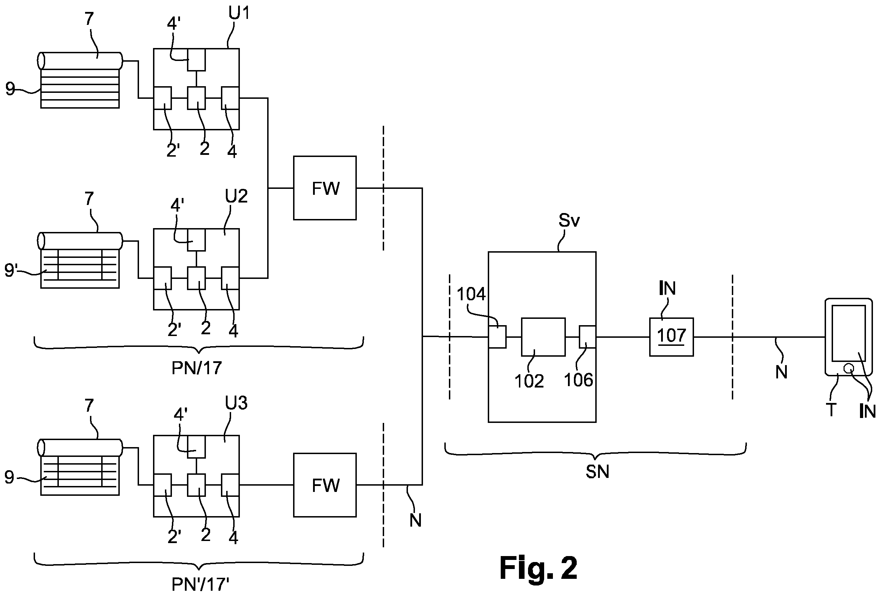

Comme cela est représenté sur la figure 2, chaque unité centrale de commande U est agencée pour communiquer avec un serveur Sv.

Les unités centrales de commande U1, U2, U3 sont disposées sur un réseau privé PN, PN', dont l'accès est en général protégé par un pare-feu FW. En particulier, dans l'exemple représenté sur la figure 2, deux unités centrales de commandes U1, U2 sont disposées sur un premier réseau privé correspondant à une première installation domotique, alors qu'une troisième unité centrale de commande U3 est disposée sur un second réseau privé PN', indépendant du réseau privé PN correspondant à une deuxième installation domotique 17'. Le serveur Sv est également disposé sur un réseau privé SN. Le réseau privé PN est relié à un réseau étendu N, par exemple Internet. Bien entendu, le serveur Sv est agencé pour communiquer avec un ensemble de telles unités centrales de commande U. Nous décrirons par la suite une de ces unités.

Une unité centrale de commande U comprend une unité de traitement 2 agencée pour contenir et exécuter un premier programme d'ordinateur. A titre d'exemple, l'unité de traitement 2 comprend un processeur, une mémoire flash de stockage ainsi d'une mémoire vive, et d'une puce Ethernet.

L'unité centrale de commande U comprend, en outre, au moins un module de communication 2' destiné au contrôle et/ou à la commande d'équipements domotiques 3 et/ou de capteurs 5, les équipements domotiques 3 pouvant être des actionneurs 7, des éclairages 21, un système d'alarme, ou une caméra vidéo.

A titre d'exemple, comme cela est représenté sur la figure 2, le module de communication 2' permet le contrôle et la commande d'au moins un actionneur 7, d'un élément mobile du bâtiment 1, comme par exemple un volet roulant 9, ou d'un brise soleil orientable 9' ou d'autres actionneurs 7 ou d'éclairages 21, comme cela est précédemment décrit en référence à la figure 1.

A titre d'exemple, le module de communication 2' peut être agencé pour mettre en œuvre par exemple un ou plusieurs des protocoles Z-Wave, EnOcean, IO Homecontrol, Somfy RTS, KNX, MODBUS, Wavenis, Philips HUE.

Selon une autre possibilité, par exemple dans le cadre de systèmes d'alarme, l'unité centrale de commande peut être intégrée dans le dispositif domotique. Selon encore une autre possibilité, Il est également possible que l'unité centrale de commande soit intégrée à un routeur et/ou à un modem réalisant une connexion à un réseau étendu, notamment à Internet.

La réception d'informations d'un capteur 5 fournissant des informations de présence d'un utilisateur ou des valeurs des paramètres environnants, comme la température, l'humidité et la luminosité, est également prévue. De la même façon, l'unité centrale U peut permettre le contrôle et/ou la commande d'un système d'alarme.

Chaque unité centrale de commande U comprend, en outre, un module de communication 4 avec le serveur Sv. Le serveur Sv permet la commande et/ou le contrôle à distance et comprend une ou plusieurs unités de traitement 102 agencée pour contenir et exécuter un deuxième programme d'ordinateur.

Chaque unité centrale de commande U comprend, en outre, un module de communication 4' pour communiquer selon un protocole de communication local, par exemple Bluetooth, Zigbee ou Wifi, avec un terminal de communication mobile T. Le terminal de communication T peut contenir et exécuter un logiciel d'application APP.

Dans certaines applications, une unité centrale de commande U peut communiquer avec l'unité de gestion à travers un serveur intermédiaire, par exemple d'un fournisseur de service tiers, dont le serveur intermédiaire offre une interface de service ou API. Le serveur Sv comprend, de son côté, au moins une interface de communication 104 destinée à la communication avec l'unité centrale U.

Le serveur Sv peut comprendre également une interface de communication 106 destinée à la communication avec une interface de commande et/ou de contrôle IN permettant à un utilisateur de contrôler à distance l'installation domotique.

Il est à noter que le terme serveur est une désignation logique qui peut recouvrir l'utilisation de plusieurs serveurs physiques pour répartir la charge de traitement informatique à réaliser.

L'interface de commande et/ou de contrôle IN comprend, par exemple, un serveur web 107 et un terminal de communication mobile T communiquant par le réseau étendu N. Le terminal de communication mobile T peut être, par exemple, un téléphone intelligent ou une tablette. Le terminal de communication mobile T peut être le même ou un terminal du même type que celui avec lequel l'unité centrale de commande U communique en local au moyen du module de communication 4', ou un terminal différent. Nous désignerons indifféremment ces terminaux mobiles par la référence T.

L'interface de commande et/ou de contrôle IN comprend un processeur qui peut être disposé au niveau du serveur web 107 et/ou du terminal de communication mobile T.

Le processeur de l'interface de commande et/ou de contrôle IN est agencé pour utiliser un troisième programme d'ordinateur. Ce troisième programme d'ordinateur est quant à lui agencé pour exécuter une application téléchargeable.

Le terminal de communication mobile T comprend un dispositif d'entrée de données et un dispositif d'affichage, par exemple sous forme d'une partie de commande tactile d'un écran du terminal T et sous forme d'un ou de plusieurs boutons du terminal T.

Les figures 1 et 2 décrivent une installation 17 qui comprend un ensemble de dispositifs D et une pluralité d'unités centrales de commande U1, U2, disposées dans un même logement, un même bâtiment ou un même lieu physique.

Un exemple de mode de réalisation d'un identifiant unique d'un dispositif DURL va être à présent décrite.

Selon ce mode de réalisation, l'identifiant unique d'un dispositif DURL comprend des informations sur :
- Le protocole natif local du dispositif domotique D ;
- Le chemin de communication vers le dispositif D, incluant les unités centrales de commande intermédiaires U et les adresses de terminaison à traverser, organisées ou non dans une topologie hiérarchique ;
- Un identifiant de sous-système subsystemId si le dispositif comprend plusieurs sous-ensemble fonctionnels ou sous-systèmes qui peuvent être adressés séparément. Les dispositifs qui ne comprennent qu'un ensemble fonctionnel ne présentent pas d'extension d'identification d'un sous-système.

Ainsi, la forme de l'identifiant unique d'un dispositif DURL peut être la suivante :
<protocol>://<gatewayId>/<rawDeviceAddress>(#<subsystemId>)

Dans laquelle les champs suivants sont présents :
protocol : identifiant du protocole local de dispositif natif;
gatewayId : identifiant de la première unité centrale de commande U, par exemple un numéro de série ou un identifiant unique.
rawDeviceAddress : un chemin simple ou à plusieurs niveaux. Sa signification et son format dépendent du schéma d'adressage du protocole de communication local du dispositif D.
subsystemId : ce champ optionnel indique une identification, par exemple un rang du sous-système (démarrant par exemple à 1), si un tel sous-système est présent.

### Exemples:

### 1) knx://0201-0001-1234/1.1.3

Cet identifiant unique de dispositif DURL correspond à un dispositif D communiquant par le protocole KNX avec une adresse individuelle 1.1.3 accessible par l'unité centrale de commande U portant l'identifiant #0201-0001-1234.

### 2) io://0201-0001-1234/145036#2

Cet identifiant unique d'un dispositif DURL correspond à un sous-système portant le n°2 associé à un dispositif D communiquant par le protocole io homecontrol avec une adresse radio 145036 accessible par l'unité centrale de commande U portant l'identifiant #0201-0001-1234.

Les manipulations des données relatives aux dispositifs D au niveau du serveur Sv sont réalisées par un processus ou service d'exécution ES. Afin de stocker les données relatives aux différentes instances de dispositif D mentionnées ci-dessus, le service d'exécution peut avoir accès à une base de données d'instances IDB. Bien entendu, ces différents types d'instances peuvent être stockés également de façon séparée. Par ailleurs, par base de données, on entend ici un mode de stockage approprié pour un ensemble d'instances, qui peuvent être mémorisées dans une liste, un arbre ou des tables ou tout autre structure de données appropriée.

### Entités représentatives

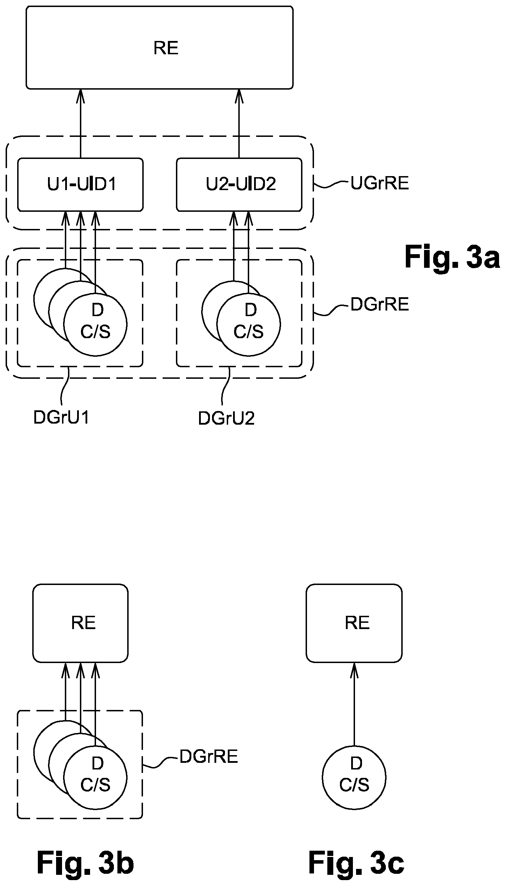

Nous allons à présent décrire, en référence à la figure 3a, la représentation de l'installation 17 par une entité représentative RE sur le serveur Sv, dans le cas où l'installation comprend de multiples unités centrales de commandes U.

Le système selon l'invention peut rattacher plusieurs unités centrales de commande U à un seul objet RE représentant une installation 17 par une configuration au niveau du serveur Sv.

Le serveur Sv peut ainsi présenter à l'utilisateur l'installation 17 comme un seul ensemble de dispositifs D, par exemple par l'intermédiaire d'une Interface de Programmation d'Application ou API, dans lequel chaque dispositif D peut accepter un ensemble donné de commandes C ou présenter des variables d'état S.

Le serveur Sv peut également utiliser un système ou couche d'abstraction pour les commandes C et les variables d'état S pour proposer une API plus générique et indépendante du protocole de communication utilisée par un dispositif D donné.

A titre d'exemple, l'identification de l'entité représentative RE de l'installation peut être réalisée par :
- un numéro de série ou un autre identifiant d'un dispositif appartenant à l'installation, si ce dispositif n'appartient qu'à une seule installation ;
- un identifiant ou un numéro d'une unité centrale de commande appartenant à l'installation, si cette unité n'appartient qu'à une seule installation ;
- un identifiant ou numéro d'installation créé au préalable par l'unité de gestion lors de la première déclaration d'un dispositif et/ou unité centrale de commande.

Ces trois exemples s'appliquent également au cas d'une entité représentative correspondant à un groupe de dispositif ou à un dispositif seul.

Ainsi, pour simplifier la désignation d'une installation dans les APIs publiques, il suffit que les utilisateurs de ces APIs fournissent un identifiant unique attachée à l'entité représentative RE de l'installation 17.

De façon interne au serveur, un identifiant unique de l'entité représentative RE de l'installation 17 peut exister pour faciliter l'implémentation.

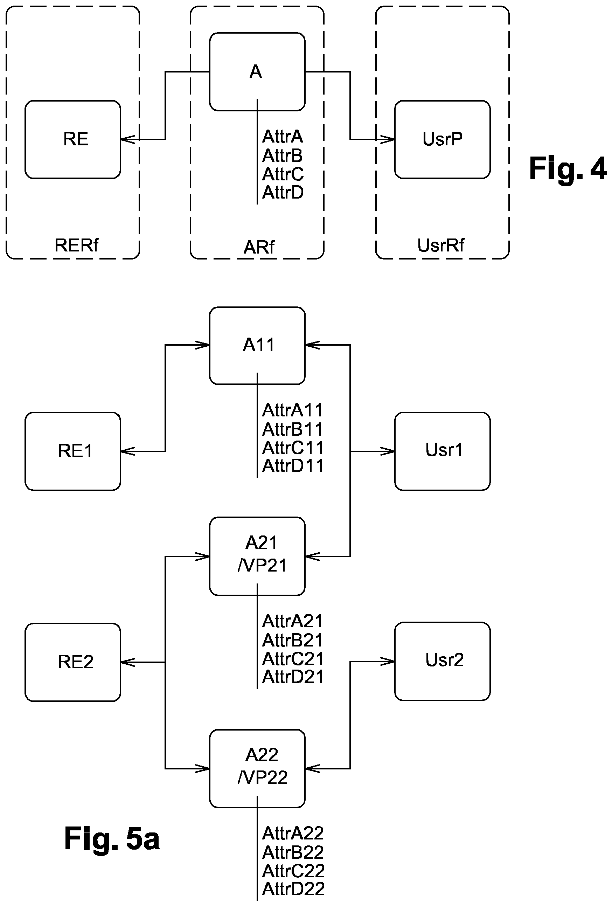

L'entité représentative RE peut être associée à une liste ou groupe de dispositifs DGrRE regroupant les dispositifs contenus dans les différents groupes DGrU1, DGrU2 attachés à chaque unité centrale de commande U1, U2, et à un groupe UGrRE des identifiants UID des unités centrales de commandes concernées U. Les dispositifs sont identifiés par un identifiant unique. Une entité représentative d'une installation domotique peut être associée avec un utilisateur donné Usr1, identifié par un identifiant UsrID, correspondant par exemple à une combinaison login et mot de passe ou avec un groupe d'utilisateurs donné UsrGrRE, d'une façon qui sera décrite ultérieurement en référence à la figure 4.

Selon une autre possibilité représentée sur la figure 3b, une entité représentative RE peut représenter seulement un groupe de dispositif DGrRE qui n'est pas nécessairement lié à une même unité centrale de commande. Selon encore une possibilité représentée sur la figure 3c, une entité représentative RE peut représenter seulement un dispositif domotique D seul.

Ainsi, une entité représentative RE est une structure de données qui représente un dispositif domotique D, un groupe de dispositif domotiques DGrRE ou une installation 17.

### Associations entre une entité représentative et un utilisateur

Le rattachement d'une entité représentative à un ou plusieurs profils utilisateurs selon l'invention va à présent être décrit en référence à la figure 4.

Un profil utilisateur comprend au moins un identifiant d'utilisateur qui représente de façon unique l'utilisateur pour le serveur. L'identifiant utilisateur correspond typiquement à une chaîne de caractère choisie à l'inscription ou à un email. Des informations permettant l'authentification de l'utilisateur peuvent être également attachées au profil utilisateur comme un mot de passe ou d'autres facteurs d'authentification. Des informations personnelles peuvent également être attachées optionnellement au profil utilisateur, comme un nom, un prénom ou une adresse.

Une entité représentative RE est rattachée à un utilisateur ou à un groupe d'utilisateur UsrGr par l'intermédiaire d'une association A. Une association A définit la relation entre au moins un utilisateur Usr et une entité représentative RE. L'association peut être rattachée à un ou plusieurs attributs d'accès Attr.

Un attribut d'accès Attr peut notamment correspondre à l'un des éléments suivants :
- Un indicateur de propriété AttrA ;
- Un libellé d'installation AttrB ;
- Un profil de droits d'accès AttrC ; ou
- Un indicateur d'installation par défaut AttrD.

Selon un mode de réalisation, chaque association est associée à une valeur pour l'ensemble des attributs mentionnés ci-dessus.

Un indicateur de propriété AttrA permet d'indiquer que cette installation a été enregistrée par l'utilisateur associé. Typiquement pour une installation donnée, l'utilisateur propriétaire est celui qui a déclaré/créé l'installation.

L'utilisateur propriétaire est considéré comme l'utilisateur principal de l'installation. A ce titre il dispose d'un statut particulier lui permettant d'accéder à certaines opérations comme :
- Une résiliation complète,
- L'ajout/suppression d'utilisateurs secondaires sur son installation,
- ajout/suppression d'une association entre l'utilisateur et l'entité représentative.

Un même utilisateur, peut être propriétaire d'une première installation correspondant à une première entité représentative RE, une première association A entre l'utilisateur et l'entité représentative comprenant un attribut AttrA d'indicateur de propriété activé et considéré comme non-propriétaire ou utilisateur secondaire sur une deuxième installation correspondant à une seconde entité représentative RE, par l'intermédiaire d'une deuxième association A sans indicateur de propriété.

Le libellé d'installation AttrB permet à l'utilisateur de personnaliser le nom de chaque installation à laquelle il a accès. A titre d'exemple, les libellés peuvent être « Résidence principale », « Résidence secondaire » ou même « Maison du voisin ».

Lorsqu'un utilisateur est associé à une entité représentative RE, un profil de droit d'accès AttrC peut lui être assigné, générique ou personnalisé.

Ce profil de droit d'accès définit les droits d'accès aux produits de l'installation, c'est à dire :
- La possibilité de voir les caractéristiques d'un dispositif D, les valeurs de ses variables d'états S ou d'une sous partie de ses variables d'état S.
- La possibilité de piloter un dispositif ou une sous partie de ses fonctions

Les profils de droits d'accès peuvent correspondre à des profils prédéfinis et/ou à une liste de droits sur des dispositifs ou des groupes de dispositifs appartenant à une entité représentative.

Ainsi, à titre d'exemple, il est possible de prévoir différents niveaux pour la commande ou le pilotage et la supervision. En particulier, pour la commande et le pilotage, il est possible de prévoir plusieurs niveaux de droits :
1- Autorisation à piloter toutes les commandes de tous les dispositifs ;
2- Autorisation à piloter toutes les commandes d'un dispositif ;
3- Autorisation à utiliser une commande en particulier d'un dispositif.

Les autorisations peuvent être modifiées par des attributs spécifiques. Par exemple un locataire peut voir son autorisation de pilotage bridée : il lui est possible de modifier la température de consigne d'un thermostat, mais seulement d'un nombre de degrés prédéterminées autour d'une valeur fixe.

Les autorisations 2 et 3 peuvent être multiples et contenues dans une liste pour couvrir plusieurs dispositifs et/ou commandes.

Pour la supervision, il est également possible de prévoir plusieurs niveaux de droits :
1 - Autorisation de consulter toutes les variables d'état de tous les dispositifs ;
2 - Autorisation de consulter toutes les variables d'état d'un dispositif ;
3 - Autorisation de consulter une variable d'état d'un dispositif.

Les autorisations 2 et 3 peuvent être multiples contenues dans une liste pour couvrir plusieurs dispositifs et/ou variables d'état.

Il est possible de prévoir plusieurs niveaux d'utilisateurs.

Les droits d'un utilisateur d'un niveau donné peuvent être définis par un utilisateur d'un niveau supérieur pour un dispositif individuel ou un groupe de dispositifs. Les droits accordés à l'utilisateur du niveau inférieur sont limités aux droits disponibles pour l'utilisateur du niveau supérieur.

À titre d'exemple, il est possible de prévoir deux niveaux d'utilisateurs, avec un premier niveau comprenant un utilisateur principal, et un deuxième niveau comprenant des utilisateurs secondaires.

L'utilisateur principal de l'installation possède typiquement un profil de droits d'accès AttrC offrant un accès total et sans restriction. Les autres utilisateurs secondaires, par exemple dans le cercle familial ou dans le voisinage, associés à la même installation peuvent par contre faire l'objet de filtres afin de réduire leurs droits d'accès aux éléments de l'installation. A titre d'exemple, ils peuvent avoir accès à une consultation seulement, ou au pilotage d'un produit ou d'une fonction en particulier.

Des types prédéfinis de profils de droits d'accès peuvent être définis, par exemple « propriétaire » ou « invité ».

Une relation entre un utilisateur et une installation peut être déclarée « par défaut » grâce à l'attribut d'installation par défaut AttrD.

Dans le cas où l'accès à une interface utilisateur nécessite la sélection d'une entité représentative, cet indicateur permet d'éviter à l'utilisateur de devoir choisir son installation en présélectionnant une entité représentative au départ. L'utilisateur peut changer l'entité représentative sélectionnée par la suite.

Une période de validité VP peut également être rattachée à une association. Cette période de validité peut être périodique et correspondre par exemple à des horaires d'autorisation de certains types de commande, ou encore définir une durée d'utilisation entre une date de début et une date de fin.

Pendant la période de validité, deux possibilités sont offertes concernant les profils d'accès :
Selon une possibilité, un partage d'accès temporaire peut être réalisé.
Selon une autre possibilité, une délégation temporaire peut être réalisée. Il s'agit d'un cas dans lequel un utilisateur décide de fournir temporairement un accès à son installation à un autre utilisateur, tout en désactivant son propre accès à cette installation durant la même période. Un cas typique correspondant à cette configuration est la location de bien immobilier. Pendant cette période, le propriétaire n'a plus accès à son installation qui est sous contrôle du locataire. Ceci a une importance d'un point de vue légal puisque le propriétaire n'a pas le droit d'interférer avec le bien immobilier sans autorisation du locataire pendant la période d'occupation du bien.

Le fait de déléguer l'accès à l'installation ne délègue pas nécessairement tous les droits du propriétaire à l'utilisateur choisi. En effet, le locataire, même s'il dispose d'un accès exclusif au logement, peut avoir des restrictions fonctionnelles. A titre d'exemple, il pourra actionner les volets roulants mais ne pas modifier la configuration de la chaudière.

L'implémentation de cette délégation nécessite l'introduction d'un attribut ou d'une table supplémentaire pour indiquer la délégation. Lorsqu'une délégation est présente, l'accès à l'installation par l'utilisateur délégateur sera bloqué pendant les périodes où l'accès sera autorisé à l'utilisateur cible. Il s'agit d'états antagonistes. Par exemple, si l'accès du locataire est soumis à une expiration temporelle, l'accès du propriétaire redevient automatiquement possible à cette date.

Il est possible selon un mode de réalisation d'enregistrer les instances d'entités représentatives dans un référentiel d'entités représentatives RERf, les instances de profils utilisateurs dans un référentiel d'utilisateurs UsrRf et les instances d'associations dans un référentiel d'associations ARf.

Les manipulations des données relatives aux entités représentatives, aux utilisateurs et aux associations au niveau du serveur Sv sont réalisées par un processus ou service d'exécution ES. Afin de stocker les données des différents référentiels mentionnés ci-dessus, le service d'exécution peut avoir accès à une base de données d'instances IDB comme évoqué précédemment. Bien entendu, ces différents types d'instances peuvent être stockés également de façon séparée. Par ailleurs, par base de données, on entend ici un mode de stockage approprié pour un ensemble d'instances, qui peuvent être mémorisées dans une liste, un arbre ou des tables ou tout autre structure de données appropriée.

### Exemple 1 : Locataire

Un exemple de schéma de relation entre des utilisateurs Usr1, Usr2 et des entités représentatives est représenté à la figure 5a. Ainsi, une première entité représentative RE1 peut être rattachée à un premier utilisateur Usr1 par l'intermédiaire une première association A11. Des attributs AttrA11, AttrB11, AttrC11, AttrD11 sont définis pour cette association. En particulier, l'attribut AttrA11 d'indicateur de propriété peut présenter une valeur vraie ou activé, indiquant que l'utilisateur Usr1 est propriétaire du dispositif, du groupe de dispositifs ou de l'installation correspondant à l'entité représentative RE1. A titre d'exemple, l'entité représentative RE1 peut correspondre à une installation domotique de la résidence principale de l'utilisateur Usr1. L'attribut AttrB11 peut ainsi prendre la valeur « résidence principale ». L'attribut AttrC11 de profil de droits d'accès peut prendre une valeur indiquant des droits d'accès complets. L'attribut AttrD11 peut prendre une valeur vraie ou activée pour indiquer que l'installation correspondant à l'entité représentative est l'installation par défaut pour l'utilisateur Usr1.

Une deuxième entité représentative RE2 peut être rattachée au premier utilisateur Usr1 par l'intermédiaire une deuxième association A21. Des attributs AttrA21, AttrB21, AttrC21, AttrD21 sont définis pour cette association. En particulier, l'attribut AttrA21 d'indicateur de propriété peut présenter une valeur vraie ou activé, indiquant que l'utilisateur Usr1 est propriétaire du dispositif, du groupe de dispositifs ou de l'installation correspondant à l'entité représentative RE2. A titre d'exemple, l'entité représentative RE2 peut représenter une installation d'un autre bâtiment dont est propriétaire l'utilisateur Usr1, mais qu'il offre en location. L'attribut AttrB11 peut ainsi prendre la valeur « appartement à louer ». L'attribut AttrC11 de profil de droits d'accès peut prendre une valeur indiquant des droits d'accès complets. L'attribut AttrD11 peut prendre une valeur « faux » ou désactivé pour indiquer que l'installation correspondant à l'entité représentative RE2 n'est pas l'installation par défaut pour l'utilisateur Usr1.

Selon d'autres possibilités, la seconde entité représentative peut également correspondre à :
- un groupe de dispositifs DGrRE que le propriétaire désigne, comme un ensemble de volets avec un attribut de profil d'accès « commande autorisée » pour un utilisateur locataire.
- un groupe de dispositifs DGrRE rattachés à une même unité centrale de commande. Cette situation peut correspondre à un cas dans lequel une première unité centrale de commande pilote les dispositifs d'une partie d'un bâtiment occupée par un propriétaire, et une deuxième unité centrale de commande pilotant les dispositifs d'une deuxième partie du bâtiment destinée à être occupé par un locataire. L'association entre l'utilisateur locataire et le groupe de dispositifs rattachés à la seconde unité centrale de commande peut être attachée à un attribut d'accès correspondant à un mode « invité ».

La deuxième entité représentative RE2 peut être rattachée à un deuxième utilisateur Usr2 par l'intermédiaire une troisième association A22. Des attributs AttrA22, AttrB22, AttrC22, AttrD22 sont définis pour cette association. En particulier, l'attribut AttrA22 d'indicateur de propriété peut présenter une valeur fausse ou désactivée, indiquant que l'utilisateur Usr2 n'est pas propriétaire du dispositif, du groupe de dispositifs ou de l'installation correspondant à l'entité représentative RE2. L'attribut AttrB11 peut ainsi prendre la valeur « appartement loué » ou « volets de la partie de bâtiment louée » selon les exemples évoqués précédemment. L'attribut AttrC11 de profil de droits d'accès peut prendre une valeur indiquant des droits d'accès complets ou partiels. L'attribut AttrD11 peut prendre une valeur « vraie » ou activée pour indiquer que l'installation correspondant à l'entité représentative RE2 est l'installation par défaut pour l'utilisateur Usr2.

Une période de validité VP22 peut être précisée en lien avec la troisième association A22, en association avec le profil de droit d'accès.

Cette période de validité VP22 peut être périodique et correspondre par exemple à des horaires d'autorisation de certains types de commande. Dans ce cas, l'accès à l'installation n'est possible que dans les plages horaires spécifiées. Un cas typique correspondant à cette configuration est un accès limité dans le temps ou sur des heures ouvrables. Un autre cas correspond à une location saisonnière, pour laquelle le propriétaire désigne un ensemble de volets avec l'attribut « commande autorisée » entre une date de début et une date de fin, pour un utilisateur locataire.

Une délégation d'accès peut être envisagée pour l'utilisateur Usr2. Dans ce cas le profil d'accès de l'utilisateur Usr1 défini dans l'association A21 est désactivé pendant une période de validité VP21 correspondant à la période de validité VP22.

### Exemple 3 : Membres d'une famille

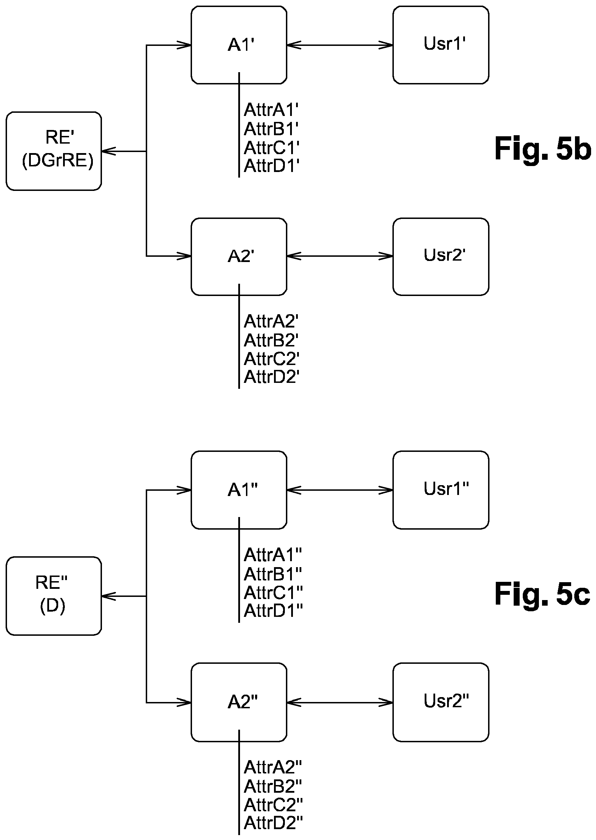

Un second exemple de schéma de relation entre des utilisateurs Usr1', Usr2' et une entité représentative RE' est représenté à la figure 5b. Un cas typique correspondant à cet exemple est la création de comptes secondaires pour les membres de la famille. Dans ce cas, l'utilisateur principal Usr1' créé des comptes secondaires Usr2' qu'il met en relation avec son installation, avec un profil d'accès restreint si nécessaire. Ainsi, une entité représentative RE' peut être rattachée à un premier utilisateur Usr1' par l'intermédiaire une première association A1'. Des attributs AttrA1', AttrB1', AttrC1', AttrD1' sont définis pour cette association. En particulier, l'attribut AttrA1' d'indicateur de propriété peut présenter une valeur vraie ou activé, indiquant que l'utilisateur Usr1' est propriétaire du dispositif, du groupe de dispositifs ou de l'installation correspondant à l'entité représentative RE'. A titre d'exemple, l'entité représentative peut correspondre à une installation domotique de la résidence principale de l'utilisateur Usr1'. L'attribut AttrB1' peut ainsi prendre la valeur « résidence principale ». L'attribut AttrC1' de profil de droits d'accès peut prendre une valeur indiquant des droits d'accès complets. L'attribut AttrD1' peut prendre une valeur vraie ou activée pour indiquer que l'installation correspondant à l'entité représentative est l'installation par défaut pour l'utilisateur Usr1'.

L'entité représentative RE' peut être rattachée à un deuxième utilisateur Usr2' par l'intermédiaire une deuxième association A2'. Des attributs AttrA2', AttrB2', AttrC2', AttrD2' sont définis pour cette association. En particulier, l'attribut AttrA2' d'indicateur de propriété peut présenter une valeur fausse ou désactivée, indiquant que l'utilisateur Usr2' n'est pas propriétaire du dispositif, du groupe de dispositifs ou de l'installation correspondant à l'entité représentative RE'. L'attribut AttrB1' peut ainsi prendre la valeur « résidence principale ». L'attribut AttrC1' de profil de droits d'accès peut prendre une valeur indiquant des droits d'accès complets ou partiels. L'attribut AttrD1' peut prendre une valeur « vrai » ou activée pour indiquer que l'installation correspondant à l'entité représentative RE' est l'installation par défaut pour l'utilisateur Usr2'. Les deux associations A1' et A2' peuvent être actives en même temps. Un partage d'accès à l'installation est donc réalisé. Ainsi, l'utilisateur Usr1' donne un accès limité ou non à d'autres utilisateurs Usr2' sur une installation ou un groupe de dispositifs dont il est propriétaire.

### Exemple 3 : Maintenance

Un troisième exemple de schéma de relation entre des utilisateurs Usr1", Usr2" et une entité représentative RE" est représenté à la figure 5c. L'entité représentative correspond dans ce cas à un dispositif unique. Cette disposition peut par exemple correspondre au cas d'un dispositif D de type chaudière qui pourrait être associé à un utilisateur Usr2" en charge de la maintenance, par exemple le fournisseur du dispositif ou un installateur spécialisé, selon un profil de droit d'accès « maintenance ». Les autres dispositifs de l'installation à laquelle appartient ce dispositif ne sont pas visibles ou commandables par cet utilisateur Usr2".

Dans ce cas, l'utilisateur principal Usr1" peut créer un compte secondaire Usr2" qu'il met en relation avec un dispositif D de type chaudière, avec un profil d'accès correspondant aux opérations de maintenance. Ainsi, une entité représentative RE" peut être rattachée au premier utilisateur Usr1" par l'intermédiaire une première association A1". Des attributs AttrA1", AttrB1", AttrC1", AttrD1" sont définis pour cette association. En particulier, l'attribut AttrA1" d'indicateur de propriété peut présenter une valeur vraie ou activé, indiquant que l'utilisateur Usr1' est propriétaire du dispositif D correspondant à l'entité représentative RE1. L'attribut AttrB1' peut ainsi prendre la valeur « chaudière ». L'attribut AttrC1" de profil de droits d'accès peut prendre une valeur indiquant des droits d'accès complets. L'attribut AttrD1" peut prendre une valeur fausse ou désactivée pour indiquer que l'installation correspondant à l'entité représentative n'est pas l'installation par défaut pour l'utilisateur Usr1".

L'entité représentative RE" peut être rattachée à un deuxième utilisateur Usr2" par l'intermédiaire une deuxième association A2". Des attributs AttrA2", AttrB2", AttrC2", AttrD2" sont définis pour cette association. En particulier, l'attribut AttrA2" d'indicateur de propriété peut présenter une valeur fausse ou désactivée, indiquant que l'utilisateur Usr2' n'est pas propriétaire du dispositif correspondant à l'entité représentative RE". L'attribut AttrB1" peut ainsi prendre la valeur « chaudière de l'utilisateur Usr1" ». L'attribut AttrC1" de profil de droits d'accès peut prendre une valeur indiquant des droits d'accès complets ou partiels correspondant à la maintenance. L'attribut AttrD1' peut prendre une valeur « faux » ou désactivée pour indiquer que l'installation correspondant à l'entité représentative RE" n'est pas l'installation par défaut pour l'utilisateur Usr2". Les deux associations A1' et A2' peuvent être actives en même temps. Un partage d'accès au dispositif est donc réalisé.

### Procédé de configuration

### Premier mode de mise en œuvre

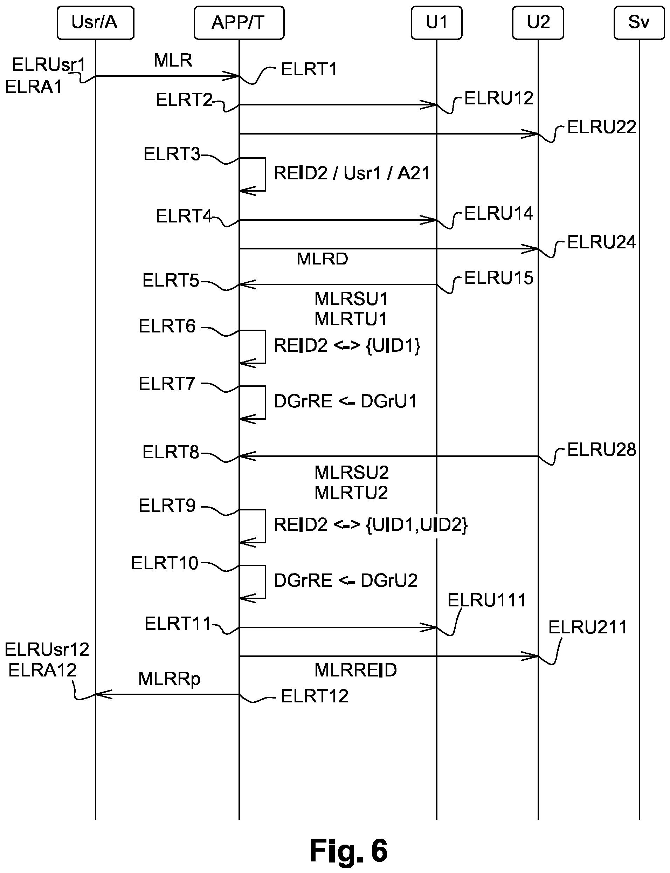

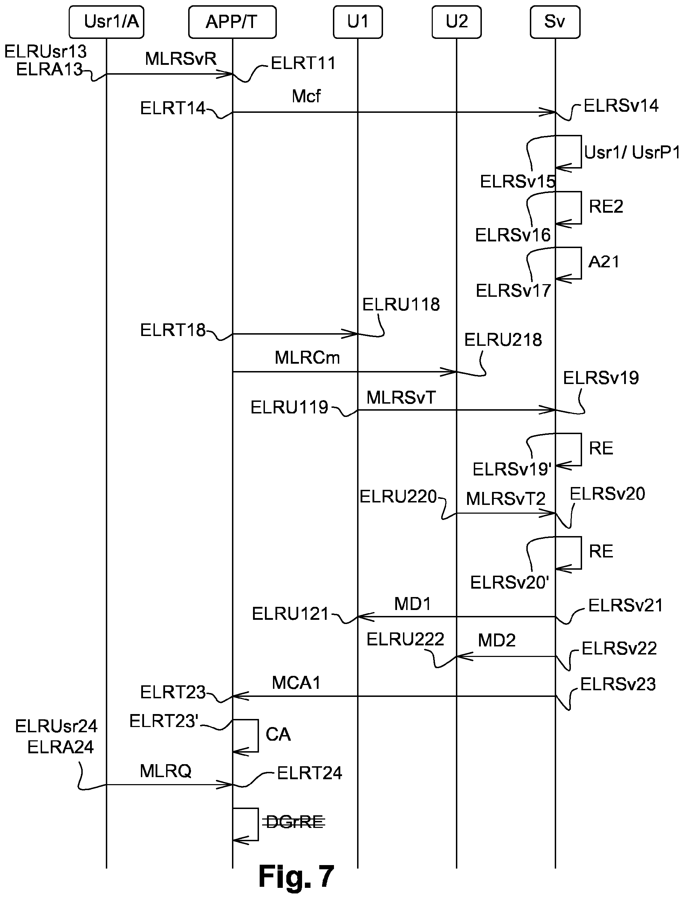

Nous allons à présent décrire un premier mode de réalisation d'un procédé de configuration d'une installation domotique 17 en référence aux figures 6 et 7. Nous considérons ici un exemple dans lequel l'entité représentative qui est créée correspond à une installation complète 17 avec deux unités centrales de commande U1 et U2. En particulier, nous considérerons ici la configuration d'un ensemble de relation tel que décrit précédemment en référence à la figure 5a, avec une entité représentative RE2, liée par des associations A21 et A22 respectivement à deux utilisateurs Usr1 et Usr2. Nous supposerons également que l'utilisateur Usr1 est en possession d'un terminal utilisateur mobile T1, par exemple exécutant une application APP1, et que l'utilisateur Usr2 est en possession d'un terminal utilisateur mobile T2, par exemple exécutant une application APP2.

Dans une première étape ELRT1, un message MLR ou une instruction d'initiation de l'enregistrement ou de la configuration est reçu en provenance par exemple d'un utilisateur ou d'une application tierce qui émet ou communique ce message ou cette instruction respectivement dans une étape ELRUsr1 ou ELRA1. L'utilisateur peut avoir préalablement lancé l'application APP et renseigné ses identifiants Usr1ID, par exemple un login et mot de passe, ces éléments correspondant à un profil de droit d'accès Attr21B.

Ces identifiants permettent une authentification de l'utilisateur. En effet les terminaux utilisateurs ne sont pas forcement liés à une personne physique. Il faut donc s'assurer de l'identité de l'utilisateur et que l'unité de gestion puisse accorder un niveau de confiance suffisant au profil utilisateur.

Ainsi, il est possible de demander à l'utilisateur, à travers le terminal utilisateur, de présenter un ou plusieurs facteurs d'authentification comme un mot de passe ou code pin, un élément de reconnaissance biométrique comme une empreinte digitale ou pupillaire, ou encore un badge/token physique.

Le terminal est connecté dans une étape préalable ELRT2 de façon locale individuellement aux unités centrales de commande U de l'installation 17, en utilisant un protocole local, notamment un protocole sans fil, comme par exemple un protocole de type Bluetooth, Zigbee, ou encore en Wifi, soit directement, soit par l'intermédiaire d'un point d'accès qui peut intégrer dans ce cas une fonction de passerelle de protocoles (par exemple : Ethernet à WiFi/Bluetooth/ Zigbee). Les unités centrales de commande U1 et U2 acceptent cette connexion respectivement dans des étapes ELRU21 et ELRU22. Nous désignerons par la suite par terminal indifféremment le terminal ou l'application APP exécutée sur ce terminal T.

Les étapes ELRT1 et ELRT2 peuvent être interverties, la connexion pouvant être établie après réception des instructions d'initiation de l'enregistrement.

Dans une troisième étape ELRT3, un identifiant d'installation REID est généré.

Dans une quatrième étape ELRT4, un message de découverte MLRD à destination des unités centrales de commande U1, U2 est envoyé, qui est reçu par lesdites unités centrales de commandes dans des étapes respectives ELRU14 et ELRU24. Selon un exemple de réalisation, le message de découverte peut correspondre à un protocole de type « Bonjour », SSDP, UPNP.

Lors de la phase de découverte, les procédés exécutés par les unités centrales de commande et par le terminal peuvent être lancés de manière coordonnée par l'utilisateur, par exemple en appuyant sur un bouton dédié de l'unité centrale de commande U1, U2 avant de lancer l'application APP sur le terminal T. Cet appui met l'unité centrale de commande U1, U2 dans un mode « découverte » pendant un intervalle de temps, durant lequel elle répond aux messages envoyés par le terminal T. Cette procédure sécurise l'appairage, par la proximité entre l'utilisateur et l'unité centrale de commande U1, U2, et simplifie le transfert de données d'identification, car l'utilisateur ne doit pas saisir manuellement des numéros de série et des certificats qui sont assez longs. En effet, les identifiants sont uniques pour chaque l'unité centrale de commande U1, U2 produite par un fabricant.

Par la suite, la première unité centrale de commande U1 envoie, en réponse au message de découverte MLRD, dans une étape ELRU15, un message de signalement MLRSU1 en lien avec un premier identifiant unique UID1 de ladite première unité centrale de commande U1, qui est reçu par le terminal dans une étape ELRT5. La première unité centrale de commande U1 envoie également un message de description de topologie MLRTU1 comprenant une description d'un groupe de dispositifs DGrU1 rattaché à l'unité centrale de commande U1.

Dans une étape ELRT6, il est procédé au rattachement du premier identifiant UID1 de la première unité centrale de commande U1 à l'identifiant de l'installation REID et à l'enregistrement local de ce rattachement dans l'application APP sur le terminal T;

Dans une étape ELRT7, il est procédé à l'enregistrement du groupe de dispositifs DGrU1 en lien avec l'identifiant de l'installation REID2 dans un groupe de dispositif rattaché à l'installation DGrRE.

La seconde unité centrale de commande U2 envoie également, en réponse au message de découverte MLRD, dans une étape ELRU28, un message de signalement MLRSU2 en lien avec un deuxième identifiant unique UID2 de ladite deuxième unité centrale de commande U2, qui est reçu par le terminal dans une étape ELRT8. La deuxième unité centrale de commande U2 envoie également un message de description de topologie MLRTU2 comprenant une description d'un groupe de dispositifs DGrU2 rattaché à l'unité centrale de commande U2.

Pour chaque dispositif D, une unité centrale de commande peut également communiquer des commandes et paramètres associés à ces dispositifs. Les commandes peuvent être déduites par le terminal à partir du type de dispositif ou bien présentes par défaut dans l'application sur le terminal T, la liste des dispositifs servant à valider l'utilisation de ces commandes, si un dispositif de ce type est présent.

Dans une étape ELRT9, il est procédé au rattachement du deuxième identifiant UID2 de la deuxième unité centrale de commande U2 à l'identifiant de l'installation REID2 et à l'enregistrement local de ce rattachement dans l'application APP sur le terminal T;

Dans une étape ELRT10, il est procédé à l'enregistrement du groupe de dispositifs DGrU2 en lien avec l'identifiant de l'installation REID dans un groupe de dispositif rattaché à l'installation DGrRE.

L'identifiant de l'installation REID2 de l'installation domotique 17 est donc associée à un groupe UGrRE comprenant au moins les identifiants UID1, UID2 de la première unité centrale de commande U1 et de la deuxième unité centrale de commande U2.

De la même façon, l'identifiant REID de l'installation domotique 17 est associée à un groupe DGrRE de dispositifs regroupant les dispositifs contenus dans au moins le premier groupe DGrU1 de dispositifs attaché à la première unité centrale de commande U1 et au moins le deuxième groupe DGrU2 de dispositifs attaché à la deuxième unité centrale de commande U2.

Ainsi, les dispositifs sont considérés comme rattachés à au même identifiant d'une installation, dans un groupe qui rassemble l'ensemble des dispositifs de l'installation rattachés indifféremment à la première ou à la seconde unité centrale de commande qui peut être communiqué à un utilisateur ou à une application tierce.

Il est possible de prévoir une étape additionnelle ELRT11 dans laquelle un message MLRStID comprenant l'identifiant REID2 de l'installation domotique 17 est envoyé aux unités de commande U1 et U2 rattachées audit identifiant REID, en vue de son enregistrement sur les unités électroniques de commande U1, U2 dans des étapes respectives ELRU111 et ELRU211.

A ce stade, l'enregistrement local sur le terminal peut être considéré comme terminé.

Une information en retour à l'utilisateur USr ou à une application tierce A peut être communiquée dans une étape ELRT12 sous forme d'un message de réponse MLRRp qui le reçoivent dans une étape ELRUsr12 ou ELRA12 respectivement.

Il est également possible de procéder pour le terminal, dans la même étape ELRT12 ou postérieurement à une présentation sur l'interface du terminal T une interface permettant la commande ou le contrôle des dispositifs appartenant au groupe DGrRE, indépendamment de leur rattachement à une unité centrale de commande U1 ou U2.

L'enregistrement local peut être répercuté au serveur Sv en réalisant les étapes suivantes, décrites sur la figure 7.

Cette propagation des informations peut être automatique, ou sollicitée par un utilisateur ou une application tierce dans une étape ELRUsr13 ou ELRA13, le terminal recevant cette instruction ou ce message MLRSvR dans une étape ELRT13.

Le terminal T envoie dans une étape ELRT14 un message de configuration Mcf depuis un terminal utilisateur T concernant au moins un attribut d'accès Attr1 d'un utilisateur Usr1 à au moins un dispositif domotique D de l'installation 17. Selon un exemple, le message de configuration Mcf comprend l'identifiant de l'installation REID2 et les identifiants des unités centrales de commande UID1, UID2 associés compris dans le groupe UGrRE, le serveur recevant ce message dans une étape ELRSv14.

Les informations concernant les identifiants de l'installation et de l'utilisateur peuvent être explicites, par exemple contenues dans le message de configuration Mcf.

Ces informations peuvent être alternativement implicites. A titre d'exemple, il est possible d'utiliser l'adresse IP source du message provenant d'une unité centrale de commande U afin de définir l'identifiant de l'installation si cette installation comprend une seule unité centrale de commande.

Il est également possible d'utiliser une référence à un identifiant d'installation ou à une autre unité centrale de commande dans le cas où l'installation comprend plusieurs unités centrales de commande.

Une connexion avec le terminal peut être conditionnée par la saisie d'un login et d'un mot de passe, ou d'un code PIN qui permet d'identifier l'utilisateur Usr1.

Le terminal T peut également envoyer les données relatives aux dispositifs rattachés à l'identifiant REID2 du groupe DGrRE pour la constitution de cette entité représentative.

Dans une étape ELRSv15, le serveur Sv vérifie l'existence d'un profil utilisateur UsrP1 correspondant à l'utilisateur concerné Usr1 dans un référentiel d'utilisateurs UsrRf ou crée un nouveau profil d'utilisateur UsrP1 correspondant à l'utilisateur Usr1 concerné dans le cas d'une absence de profil utilisateur dans le référentiel d'utilisateurs UsrRf. Dans le cas où un nouveau profil utilisateur UsrP1 est créé, celui-ci est enregistré dans le référentiel d'utilisateurs UsrRf.

Dans une étape ELRSv16, le serveur Sv vérifie l'existence d'une entité représentative RE2 correspondant à l'installation 17 dans un référentiel d'entités représentatives RE2 ou crée une nouvelle entité représentative dans le cas d'une absence d'entité représentative dans le référentiel d'entités représentative RERf. Dans le cas où une nouvelle entité représentative RE est créée, celle-ci est enregistré dans le référentiel d'utilisateurs RERf. Dans l'exemple considéré, nous supposerons que l'entité représentative n'est pas existante. Dans ce cas, le serveur crée donc une nouvelle entité représentative de l'installation 17, en utilisant notamment les identifiants des deux unités centrales UID1 et UID2.

Dans une étape ELRSv17, le serveur Sv vérifie l'existence d'une association A entre le profil utilisateur UsrP1 et l'entité représentative RE2 dans un référentiel d'associations ARf afin de mettre à jour des attributs d'accès Attr de l'association A ou crée une nouvelle association A entre l'au moins un utilisateur Usr1 et l'au moins une entité représentative RE, l'au moins un attribut d'accès Attr étant rattaché/affecté à ladite association. Dans le cas où une nouvelle association RE est créée, celle-ci est enregistré dans le référentiel d'utilisateurs ARf.

Dans l'exemple considéré, nous supposerons que l'association A21 n'était pas préexistante, une telle association est donc créée.

Le terminal T envoie par ailleurs dans une étape ELRT18 un message de demande de communication MLRCm à destination des unités centrales de commande U1 et U2 rattachées à l'identifiant de l'installation REID, en vue de l'établissement d'une communication par l'unité centrale de commande U vers le Serveur Sv pour communiquer au serveur Sv des informations relatives à ladite unité centrale de commande U et optionnellement à une description du groupe de dispositifs DGrU1, DGrU2 rattaché à l'unité centrale de commande U1, U2, mais également en vue de collecter des commandes en provenance du Serveur Sv.

En particulier, cette étape peut correspondre à une demande d'établissement de connexion TCP/IP des unités centrales de commande U vers le serveur Sv, sur ordre de l'utilisateur.

L'ordre des étapes ELRT14 et ELRT18 est indifférent.

La réalisation effective des communications entre les unités centrales de commande U1, U2, est figurée sur le dessin par les étapes ELRU119/ELRSv19 et ELRU220/ELRSv20 respectivement. Lors de ces communications, les unités centrales de commande envoient au serveur des messages applicatifs contenant leur identifiant UID1 ou UID2, et optionnellement la liste des dispositifs pilotables par son intermédiaire, éventuellement les commandes reconnues par chaque dispositif/type de dispositif et les paramètres/variables d'état associés à ces dispositifs.

Pour renforcer la sécurité de la création de l'entité représentative RE correspondant à l'installation domotique définie, le serveur Sv peut conditionner cette création par la réception pendant un intervalle de temps prédéfini du message MLRSvR en provenance du terminal T, et des messages applicatifs en provenance des unités centrales de commande U1, U2.

Des mises à jour des informations concernant les dispositifs associés à l'installation sont ainsi effectuées par des messages que nous désignerons de façon générique comme message de description de topologie MLRSvT. Il peut s'agir de l'ajout ou de la suppression d'un dispositif rattaché à une unité centrale de commande, des paramètres changés lors d'une connexion de l'utilisateur en mode local, etc. Ainsi, un utilisateur qui se connecte via Internet à son installation domotique par l'intermédiaire du serveur Sv a une « vue » à jour de l'installation.

Selon une variante, il est également possible que l'ensemble des informations relatives aux unités centrales de commandes U1, U2 et optionnellement à une description des groupes de dispositifs DGrU1, DGrU2 rattachés à l'unité centrale de commande U1, U2 soient collectées sur le terminal T1, puis communiquées au serveur dans l'étape ELRsv14 ou dans une étape ultérieure.

Dans une étape ultérieure ELRSv21 respectivement ELRSv22, le serveur peut envoyer un message de distribution MD1, respectivement MD2, concernant la création ou la mise à jour de l'au moins une association à destination aux unités centrales de commande U1, U2 appartenant à l'installation 17 correspondant à l'entité représentative RE2 concerné par l'association A21. Ces messages sont respectivement reçus dans les étapes ELRU121 et ELRU222. Ces dispositions permettent de prévoir un contrôle d'accès sur la base des attributs d'accès en local sur l'unité centrale de commande.

Par ailleurs, dans une étape ELRSv23, le Serveur Sv peut déterminer une configuration d'affichage CA concernant au moins une commande sur au moins un dispositif domotique D pouvant être déclenchée par un utilisateur et/ou au moins une variable d'état S d'un dispositif domotique pouvant être visualisée par un utilisateur Usr1 en fonction de l'au moins un attribut d'accès, puis procéder à l'envoi d'au moins un message de configuration d'affichage MCA concernant ladite configuration d'affichage CA à destination d'un terminal utilisateur T. Ces dispositions permettent de prévoir un affichage adapté aux attributs d'accès d'un utilisateur sur le terminal. La configuration d'affichage CA est appliquée dans une étape ELRT23'.

Lors de la déconnexion de l'application, demandée par l'utilisateur Usr1 dans une étape ELUsr24 / ELRA24 par une requête ou une instruction de sortie MLRQ, le terminal T procède, dans une étape ELRT24 à la fermeture de la connexion entre le terminal utilisateur T et les unités centrales de commande U1, U2, et à l'invalidation de l'enregistrement du groupe de dispositif rattaché à l'installation DGrRE, l'enregistrement du rattachement de l'au moins un identifiant UID de l'au moins une unité centrale de commande à l'identifiant de l'installation REID étant conservé.

Lors d'une nouvelle connexion à l'application, une nouvelle découverte sera réalisée par l'application, mais en connaissant déjà les identifiants UID1, UID2 des unités centrales rattachées à l'identifiant d'installation REID.

Il suffira que les unités centrales retournent les messages de description de topologie MLRTU1, MLRTU2. Ces dispositions permettent d'avoir une vue à jour de l'installation.

Dans le cas d'une installation comprenant plusieurs unités centrales de commande, le fait de représenter l'installation domotique par une entité représentative associée à un groupe de dispositif domotiques appartenant à l'installation permet de présenter à l'utilisateur une interface comprenant une couche d'abstraction pour cacher le rattachement effectif des dispositifs aux unités centrales de commande. L'interface représente ainsi les équipements domotiques, comme les volets, stores, systèmes HVAC ou d'éclairage, pilotables dans l'installation ainsi que les capteurs présents. Ces dispositions peuvent obtenues sans communication entre les unités centrales de commande, mais simplement par le rattachement logique opéré lors de la configuration.

### Suite du premier mode de mise en œuvre : création d'un accès pour un second utilisateur

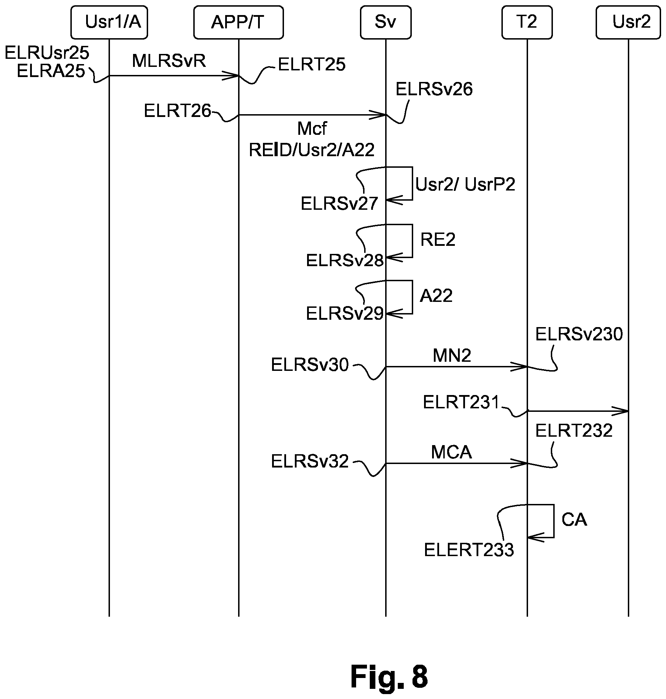

Dans une phase ultérieure représentée sur la figure 8, l'utilisateur Usr1 peut décider de réaliser la création d'un compte pour un utilisateur Usr2 et de permettre un accès à l'installation domotique 17 représentée par l'entité représentative RE2. Des attributs d'accès AttrA2, AttrB2, AttrC2, AttrD2 peuvent être définis en liaison avec l'accès du deuxième utilisateur à l'installation. Une période de validité VP22 peut également être précisée pour cet accès.

Cette configuration peut être sollicitée par un utilisateur Usr1 ou une application tierce dans une étape ELRUsr25 ou ELRA25, le terminal recevant cette instruction ou ce message MLRSvR dans une étape ELRT25.

Le terminal T envoie dans une étape ELRT26 un message de configuration Mcf; l'au moins un message de configuration concernant les attributs d'accès AttrA22, AttrB22, AttrC22, AttrD22 du deuxième utilisateur Usr2 à l'installation 17. Selon un exemple, le message de configuration Mcf comprend l'identifiant de l'installation REID2, le serveur recevant ce message dans une étape ELRSv26. Selon une alternative, le message de configuration MCf pour la création de la seconde association peut être envoyé à l'initiative du deuxième utilisateur Usr2, sous réserve d'une validation du premier utilisateur, ou dans un mode « invité » caractérisé par un attribut d'accès Attr2 prédéfini.

Dans une étape ELRSv27, le serveur Sv vérifie l'existence d'un profil utilisateur UsrP2 correspondant à l'utilisateur concerné Usr2 dans un référentiel d'utilisateursUsrRf. En l'absence d'un tel profil, le serveur Sv crée un nouveau profil d'utilisateur UsrP2 correspondant à l'utilisateur Usr2 concerné dans le cas d'une absence de profil utilisateur dans le référentiel d'utilisateurs UsrRf. Dans le cas où nouveau un profil utilisateur UsrP2 est créé, celui-ci est enregistré dans le référentiel d'utilisateurs UsrRf.

Dans une étape ELRSv28, le serveur Sv vérifie l'existence une entité représentative RE dans un référentiel d'entités représentatives. En l'absence d'une telle entité, le serveur Sv crée une nouvelle entité représentative dans le cas d'une absence d'entité représentative dans le référentiel d'entités représentative RERf . Dans le cas présent, l'entité représentative RE2 de l'installation domotique a été précédemment créée, et est donc sélectionnée par le serveur Sv.

Dans une étape ELRSv29, le serveur Sv vérifie l'existence d'une association A entre l'au moins un utilisateur et l'au moins une entité représentative dans un référentiel d'associations ARf afin de mettre à jour des attributs d'accès Attr de l'association A. Dans le cas présent, il n'existe pas d'association entre l'utilisateur Usr2 et l'entité représentative RE. Une nouvelle association A22 est donc créée entre l'au moins un utilisateur Usr1 et l'au moins une entité représentative RE2 en prenant en compte les attributs d'accès AttrA22, AttrB22, AttrC22, AttrD22. La nouvelle association A22 est ensuite enregistrée dans le référentiel d'utilisateurs ARf.

La nouvelle association A22 peut être associée à une période de validité VP22 comme cela a été décrit en référence au premier exemple ci-dessus.

Dans une étape ultérieure non représentée, le serveur Sv peut envoyer un message de distribution de façon similaire aux étapes ELRSv21 ou ELRSv22, concernant la création ou la mise à jour de l'association A22 à destination des unités centrales de commande U1, U2 appartenant à l'installation 17. Ces dispositions permettent de prévoir un contrôle d'accès sur la base des attributs d'accès en local sur l'unité centrale de commande. En particulier, un utilisateur « invité » peut utiliser un terminal utilisateur comme point de commande. Le terminal utilisateur peut notamment communiquer avec l'unité centrale de commande selon un protocole ouvert par exemple de type Wifi, Bluetooth, Zigbee. L'unité de contrôle peut appliquer des filtres d'accès et communiquer avec les dispositifs domotiques selon un protocole propriétaire. Dans ce cas, l'unité centrale de commande peut identifier l'utilisateur grâce à son terminal utilisateur, mais les dispositifs domotique n'ont pas besoin de connaître l'utilisateur.

Selon une possibilité, le même utilisateur « invité » peut utiliser des points de commande propriétaires, par exemple de type télécommande. Cette utilisation peut être limitée ou interdite par l'unité centrale de commande ou à l'initiative de l'unité de gestion, qui peut envoyer un message de blocage aux dispositifs domotiques.

Un exemple d'utilisation est une délégation temporaire d'utilisation. Les dispositifs reçoivent des commandes émises par les télécommandes propriétaires et peuvent exécuter ou non celle-ci en fonction des messages de blocage reçus. Il n'est pas nécessaire que les dispositifs domotiques ou même l'unité de gestion soient capables d'identifier l'utilisateur.

Dans une étape ELRSv30, Le serveur peut procéder à une notification MN2 d'un second terminal utilisateur T2 sous la responsabilité du second utilisateur pour lui signifier l'ouverture de droits d'accès correspondant à l'association A22. Cette notification est reçue par le second terminal dans une étape ELRT230. Le second terminal T2 peut afficher cette information dans une étape ELRT231 au second utilisateur.

Par ailleurs, dans une étape ELRSv32, le Serveur Sv peut déterminer une configuration d'affichage CA2 concernant au moins une commande sur au moins un dispositif domotique D pouvant être déclenchée par l'utilisateur Usr2 et/ou au moins une variable d'état S d'un dispositif domotique pouvant être visualisée par l'utilisateur Usr2 en fonction des attributs d'accès de son profil utilisateur, puis procéder à l'envoi d'au moins un message de configuration d'affichage MCA2 concernant ladite configuration d'affichage CA2 à destination d'un terminal utilisateur T2. Ces dispositions permettent de prévoir un affichage adapté aux attributs d'accès de l'utilisateur Usr2 sur le terminal T2. La configuration d'affichage CA est appliquée dans une étape ELRT233.

### Second mode de mise en œuvre

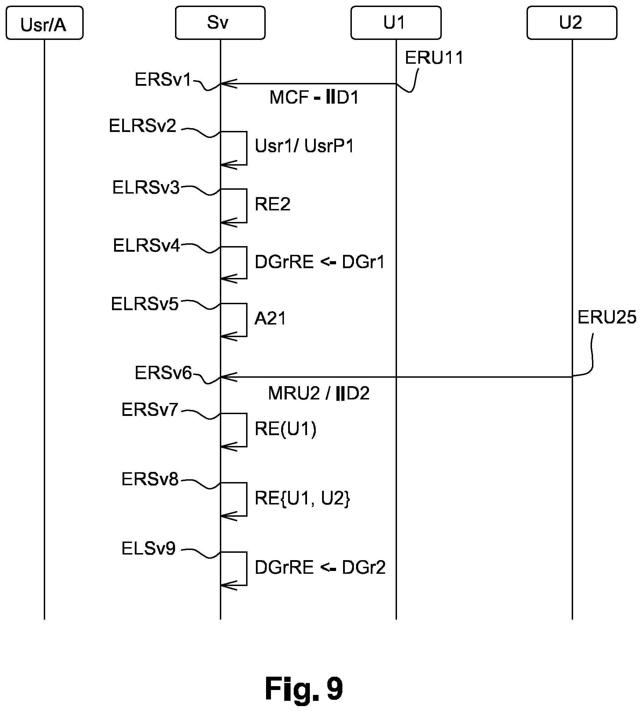

Nous allons à présent décrire un second mode de mise en œuvre d'un procédé de configuration d'une installation domotique 17 en référence à la figure 9, les informations de configuration étant communiquées non plus par un terminal utilisateur mais par au moins une unité centrale de commande.

Dans une première étape ERSv1, le serveur Sv reçoit un message de configuration MCF d'une première unité centrale de commande U1 pour l'installation 17, émise dans une étape ERU11 par une première unité centrale de commande U1, sur la base d'une information d'identification IID1 l'au moins un message de configuration Mcf' concernant au moins un attribut d'accès Attr1 d'un utilisateur Usr1 à au moins un dispositif domotique D de l'installation 17.

L'information d'identification peut correspondre par exemple à un identifiant d'une unité centrale de commande appartenant déjà à une entité représentative, et/ou à un identifiant de l'utilisateur UsrID sous la responsabilité duquel l'enregistrement est effectué et/ou directement à un identifiant d'une entité représentative d'une installation. L'information d'identification peut être contenue dans le message ou être déduite du contexte, par exemple d'une adresse réseau d'émission du message, ou encore de caractéristiques relatives à la session de communication.

Dans une étape ERSv2, le serveur Sv vérifie l'existence d'un profil utilisateur UsrP1 correspondant à l'utilisateur concerné Usr1 dans un référentiel d'utilisateurs UsrRf. En l'absence d'un tel profil, le serveur Sv crée un nouveau profil d'utilisateur UsrP1 correspondant à l'utilisateur Usr1 concerné, puis l'enregistre dans le référentiel d'utilisateurs UsrRf.

Dans une étape ERSv3, le serveur Sv vérifie l'existence d'une entité représentative RE dans un référentiel d'entités représentatives. Dans le cas considéré, en supposant qu'une telle entité n'existe pas, le serveur Sv crée une nouvelle entité représentative RE2, puis l'enregistre dans le référentiel d'utilisateurs RERf. En particulier, le serveur obtient une information de rattachement REI1 de la première unité centrale de commande U1 à une entité représentative RE2 d'une installation domotique 17. Si l'information de rattachement correspond à une absence d'information concernant un rattachement de l'unité centrale de commande U1 à une installation 17 précédemment enregistrée, le serveur procède à la création d'une entité représentative de l'installation 17 et rattache la première unité centrale de commande U1 à cette entité représentative RE2. Cela est notamment le cas lors de l'enregistrement d'une première unité centrale de commande U1 d'une installation donnée.

Dans le cas où une unité centrale de commande U est déjà appairée avec un ou plusieurs dispositifs D d'un groupe DGrU1, l'entité représentative RE2 est mise à jour dans une quatrième étape ERSv4 pour représenter ces dispositifs dans le groupe de dispositifs DGrRE attaché à l'entité représentative de l'installation 17. Ainsi, le groupe de dispositifs DGrRE est mis à jour. Les informations nécessaires à la mise à jour de l'entité représentative RE peuvent être présentes dans le message MRU2, ou faire l'objet d'échanges supplémentaires entre le serveur Sv afin d'obtenir des éléments d'identification des dispositifs D concernés.

Dans une étape ERSv5, le serveur Sv vérifier l'existence d'une association A entre l'au moins un utilisateur et l'au moins une entité représentative dans un référentiel d'associations ARf et met à jour des attributs d'accès Attr de l'association A. Dans l'exemple considéré, nous supposerons que l'association A21 n'existe pas. Dans ce cas, le serveur Sv créé une nouvelle association 21 entre l'au moins un utilisateur Usr1 et l'au moins une entité représentative RE2, les attributs d'accès AttrA21, AttrB21, AttrC21, AttrD21 étant rattachés à ladite association. L'association A21 est ensuite enregistré dans le référentiel d'utilisateurs ARf.

Dans une étape ultérieure ERSv6, le serveur Sv reçoit un message MRU2 de demande d'enregistrement d'une deuxième unité centrale de commande U2 pour l'installation 17, émis dans une étape ERU25 par une deuxième unité centrale de commande U2, ou alternativement par un terminal utilisateur T, sur la base d'une information d'identification IID2 et en lien avec le même utilisateur Usr1.

Comme nous l'avons vu précédemment, l'information d'identification peut correspondre par exemple à un identifiant d'une unité centrale de commande appartenant déjà à une entité représentative, et/ou à un identifiant de l'utilisateur UsrID sous la responsabilité duquel l'enregistrement est effectué.

Dans une étape ERSv7, le serveur Sv procède à l'obtention d'information de rattachement Stl2 de la deuxième unité centrale de commande U2 à une entité représentative RE d'une installation domotique 17. Dans le cas présent, le message MRU2 comprend, à titre d'information d'identification, un identifiant UID1 de la première unité centrale de commande U1 afin de spécifier que les deux unités centrales de commande U1 et U2 font partie de la même installation, cette information étant éventuellement combinée avec un identifiant d'utilisateur UID1.

Dans une septième étape ERSv8, le serveur Sv procède à un rattachement de la seconde unité centrale à une entité représentative RE de l'installation 17 à laquelle est également rattachée la première unité centrale de commande U1 pour le même utilisateur UID1.

Dans le cas où l'unité centrale de commande U2 est déjà appairée avec un ou plusieurs dispositifs D d'un groupe DGrU2, l'entité représentative RE est mise à jour dans une huitième étape ERSv9 pour représenter ces dispositifs dans le groupe de dispositifs DGrRE attaché à l'entité représentative de l'installation 17. Ainsi, le groupe de dispositifs DGrRE est mis à jour. Les informations nécessaires à la mise à jour de l'entité représentative peuvent être présentes dans le message MRU2, ou faire l'objet d'échanges supplémentaires entre le serveur Sv afin d'obtenir des éléments d'identification des dispositifs D concernés.

Ainsi, les unités centrales de commande U1 et U2 sont considérées comme rattachées à la même entité représentative RE d'une installation, qui rassemble l'ensemble des dispositifs D de l'installation rattachés indifféremment à la première ou à la seconde unité centrale de commande dans un même groupe DGrRE qui peut être communiqué à un terminal utilisateur T. Ces dispositions sont obtenues sans communication entre les unités centrales de commande, mais simplement par le rattachement logique opéré lors de l'enregistrement.

L'interface présentée à l'utilisateur peut ainsi ajouter une couche d'abstraction pour cacher le rattachement effectif des dispositifs aux unités centrales de commande U. L'interface représente ainsi les équipements domotiques, comme les volets, stores, HVAC ou éclairage, pilotables dans l'installation ainsi que les capteurs présents.

Si les dispositifs D sont ainsi rattachés à une entité représentative de l'installation, les informations de rattachement des dispositifs domotiques D aux unités centrales de commande U sont toutefois transmises au serveur Sv, pour intégration dans la structure de données, en vue du routage des messages vers l'unité centrale de commande concernée dans le cas de commande par le Serveur Sv. En particulier, l'identifiant de l'unité centrale de commande à laquelle se rattache un produit peut être contenue dans l'identifiant DURL.

Une unité centrale de commande U peut être détachée de l'entité représentative RE d'une installation. Lorsqu'une unité centrale de commande U est détachée, tous les dispositifs qui sont gérés par l'intermédiaire de l'unité centrale de commande sont supprimés du groupe DGrRE de dispositifs de l'entité représentative RE de l'installation 17. Ainsi, il est possible de prévoir qu'une unité centrale ne peut pas être détachée si l'entité représentative RE comprend des dépendances sur les dispositifs D gérés par cette unité centrale de commande U, comme des scénarios. Ces dépendances doivent être supprimées avant que l'unité centrale de commande U puisse être détachée, de façon manuelle ou automatique par le serveur Sv.

Dans le cas de l'appairage d'un nouveau dispositif D à une unité centrale de commande U, ou au contraire de la suppression d'un dispositif, ou encore de sa modification, un message de mise à jour est envoyé au Serveur Sv afin de mettre également à jour la liste de dispositif DGrRE dépendant de l'entité représentative RE.

Grâce à ce procédé d'enregistrement, le serveur Sv peut donc proposer sur l'interface IN une description de l'installation 17, grâce à l'utilisation de l'entité représentative sous forme d'un groupe de dispositifs D, contenu dans le groupe de dispositifs DGrRE, qui présentent des variables d'état S mais également des commandes disponibles C.

Il est ainsi possible de commander et de contrôler par l'interface l'ensemble des dispositifs de l'installation indépendamment de leur rattachement aux unités centrales U.

Suite aux étapes décrites ci-dessus, des étapes de création d'un deuxième accès pour un deuxième utilisateur, de distribution d'information sur les unités centrales ou de génération d'une configuration d'interface peuvent être mises en œuvre de façon similaire à ce qui a été décrit en référence au premier mode de mise en œuvre.

### Variante des procédés de configuration

Les premier et deuxième modes de mises en œuvre d'un procédé de configuration décrits ci-dessus concernent des entités représentatives d'installation comprenant deux unités centrales de commandes. Bien entendu, il est également possible de mettre en œuvre le procédé dans le cas d'une installation comprenant une seule unité centrale de commande.

Il est par ailleurs possible de mettre en œuvre le procédé dans le cas d'installation comprenant plus de deux unités centrales de commande pour une même installation.

### Procédé de contrôle

### Premier exemple de mise en œuvre - commande

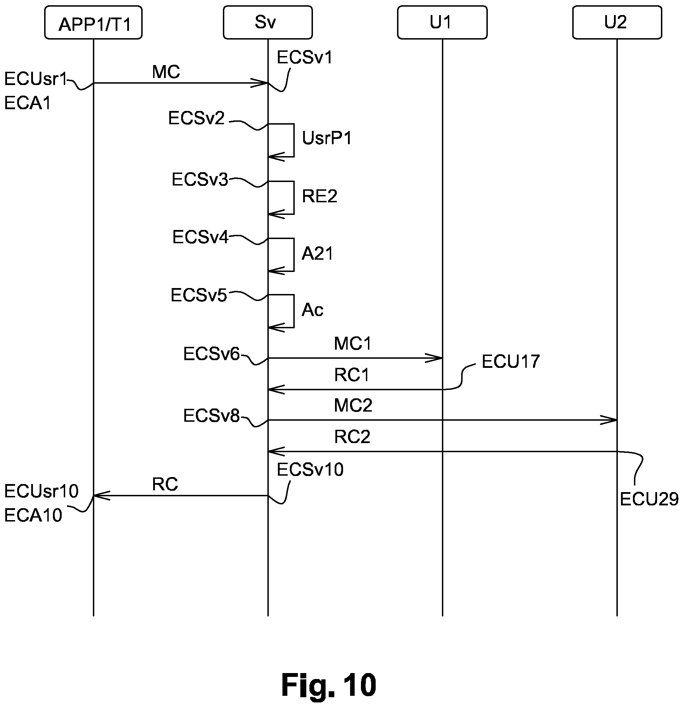

Un premier exemple de mise en œuvre d'un procédé de contrôle selon l'invention est à présent décrit en référence à la figure 10. Nous supposerons que les étapes d'un procédé de configuration tel que décrit précédemment en référence aux figures 6 à 9 a été précédemment réalisé, de façon à obtenir une configuration d'entités représentatives, d'utilisateurs et d'associations telle que représentée sur la figure 5a.

Dans une étape EcSv1, le serveur reçoit un message de contrôle MC en provenance d'un terminal utilisateur T1 en possession d'un utilisateur Usr1, le message de contrôle concernant un utilisateur Usr1 et au moins un dispositif domotique D de l'installation 17.

Nous supposerons que le message de contrôle MC contient une demande d'exécution d'une commande, en particulier d'une commande groupée correspondant à une première commande C1 destinée à un premier dispositif domotique D1 sous le contrôle d'une première unité centrale de commande U1, et une deuxième commande C2 destinée à un deuxième dispositif domotique D2 rattaché à une seconde unité centrale de commande U2, les unités de commandes U1 et U2 appartenant à une installation 17 représentée par une entité représentative RE2.

Suite à la réception du message de contrôle, le serveur Sv sélectionne un profil utilisateur UsrP1 correspondant à l'utilisateur Usr1 dans un référentiel d'utilisateurs UsrRf dans une étape ECSv2.

Le serveur sélectionne également une entité représentative RE2 correspondant aux dispositifs concernés par les commandes C1 et C2 dans un référentiel d'entités représentatives dans une étape ECSv3.

Enfin, le serveur Sv sélectionne dans une étape ECSv4 une association A21 entre l'utilisateur Usr1 et l'entité représentative RE2 de l'installation concernée par le message de contrôle dans le référentiel d'associations ARf.

Sur la base de l'association A21 sélectionnée, il est possible de déterminer les attributs d'accès de l'utilisateur Usr1 sur l'installation 17 représentée par l'entité représentative A21.

En l'occurrence en reprenant l'exemple de la figure 5a, il apparaît que l'utilisateur Usr1 est propriétaire de l'installation, comme cela est indiqué par l'attribut AttrA21. L'attribut AttrC21 de profil de droits d'accès indique des droits d'accès complets.

En conséquence, dans une étape ECSv5, le serveur peut déterminer une ou plusieurs actions Ac à réaliser en fonction du message de contrôle MC et des attributs d'accès AttrA21 à AttrD21.

Dans le cas de l'exemple de la figure 5a, le profil de droit d'accès donne l'autorisation à l'utilisateur d'exécuter la commande C1 sur le dispositif D1 et la commande C2 sur le dispositif D2. En conséquence, l'action Ac correspond à l'envoi d'un message à destination de la première unité centrale U1 afin de déclencher une première commande C1 sur le premier dispositif D1 et à l'envoi d'un message à destination de la deuxième unité centrale U2 afin de déclencher une deuxième commande C2 sur le deuxième dispositif D2.

Ainsi, dans une étape ECSv6, un premier message de commande MC1 est envoyé à destination de la première unité centrale de commande U1 en vue de la réalisation de la commande C1.

Dans l'exemple représenté, nous supposons que le retour de cette première commande correspond à un succès de la réalisation de la commande C1 avec un code de retour RC1, envoyé par l'unité centrale de commande U1 dans une étape ECU17. Le serveur Sv peut stocker cette valeur de succès.

Dans une étape ECsv8, un deuxième message de commande MC2 est envoyé à destination de la première unité centrale de commande U2 en vue de la réalisation de la commande C2.

Dans l'exemple représenté, nous supposons que le retour de cette deuxième commande correspond à un succès de la réalisation de la commande C2 avec un code de retour RC2, envoyé par l'unité centrale de commande U2 dans une étape ECU29. Le service d'exécution peut stocker cette valeur de succès.

Dans une étape ECSv10, le serveur Sv définit une réponse RC à retourner à l'utilisateur suite au message de contrôle MC.

Etant donné qu'un code de retour a été reçu pour chaque commande exécutée, les résultats doivent être agrégés pour simuler un résultat global pour la commande groupée. En particulier, la commande groupée est considéré comme effectué si toutes les commandes C1, C2 ont été réalisés avec succès, et échoué si une ou plusieurs commandes ont échoué.

Dans le cas illustré à la figure 7, il peut être considéré que la commande groupée est réussie.

Cette réponse est communiquée à l'utilisateur Usr1 ou à l'application App1 qui la reçoit dans une étape ECUsr10 ou ECA10.

Selon une variante, les codes de retour des commandes peuvent être notifiés au fur et à mesure de la réalisation des commandes à l'utilisateur ou à l'application.

### Deuxième exemple de mise en œuvre - commande

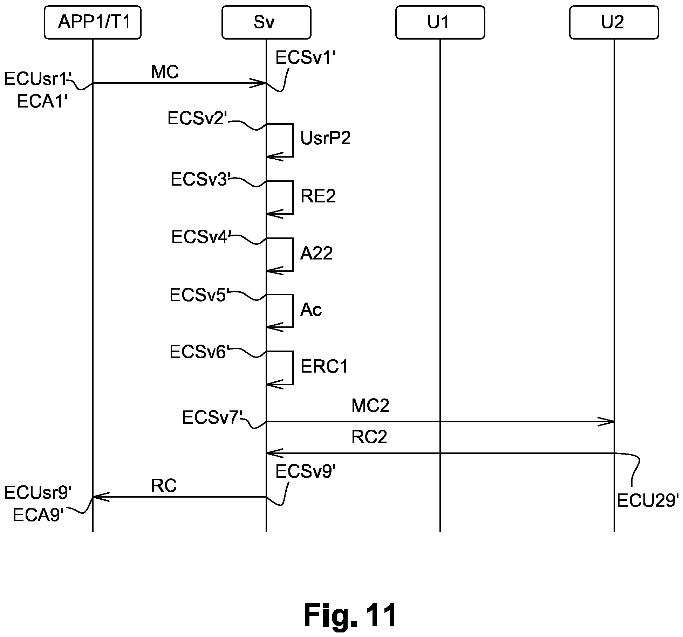

Un second exemple de mise en œuvre d'un procédé de contrôle selon l'invention est à présent décrit en référence à la figure 11. Nous supposerons que les étapes d'un procédé de configuration tel que décrit précédemment en référence aux figures 6 à 9 a été précédemment réalisé, de façon à obtenir une configuration d'entités représentatives, d'utilisateurs et d'associations telle que représentée sur la figure 5a.

Dans une étape EcSv1', le serveur reçoit un message de contrôle MC en provenance d'un terminal utilisateur T en possession d'un utilisateur Usr2, le message de contrôle concernant un utilisateur Usr2 et au moins un dispositif domotique D de l'installation 17.

Nous supposerons que le message de contrôle MC contient une demande d'exécution d'une commande, en particulier d'une commande groupée correspondant à une première commande C1 destinée à un premier dispositif domotique D1 sous le contrôle d'une première unité centrale de commande U1, et une deuxième commande C2 destinée à un deuxième dispositif domotique D2 rattaché à une seconde unité centrale de commande U2, les unités de commandes U1 et U2 appartenant à une installation 17 représentée par une entité représentative RE2.

Suite à la réception du message de contrôle, le serveur Sv sélectionne un profil utilisateur UsrP2 correspondant à l'utilisateur Usr2 dans un référentiel d'utilisateurs UsrRf dans une étape ECSv2'.

Le serveur sélectionne également une entité représentative RE2 correspondant aux dispositifs concernés par les commandes C1 et C2 dans un référentiel d'entités représentatives dans une étape ECSv3'.

Enfin, le serveur Sv sélectionne dans une étape ECSv4' une association A22 entre l'utilisateur Usr2 et l'entité représentative RE2 de l'installation concernée par le message de contrôle dans le référentiel d'associations ARf.

Sur la base de l'association A22 sélectionnée, il est possible de déterminer les attributs d'accès de l'utilisateur Usr2 sur l'installation 17 représentée par l'entité représentative RE2.

En l'occurrence, en reprenant l'exemple de la figure 5a, il apparaît que l'utilisateur Usr2 est locataire de l'installation, comme cela est indiqué par l'attribut AttrA22. L'attribut AttrC22 de profil de droits d'accès indique des droits d'accès limités.

En conséquence, dans une étape ECSv5', le serveur peut déterminer une ou plusieurs actions Ac à réaliser en fonction du message de contrôle MC et des attributs d'accès AttrA22 à AttrD22.

Dans le cas de l'exemple de la figure 5a, le profil de droit d'accès ne donne pas l'autorisation à l'utilisateur d'exécuter la commande C1 sur le dispositif D1 mais donne l'autorisation d'exécuter la commande C2 sur le dispositif D2.

En conséquence, l'action Ac correspond :
- à l'envoi d'un message à l'utilisateur ou à l'application APP1 en indiquant un message d'erreur ME ou à un stockage d'erreur ERC1 dans une étape ECSv6' ;et
- à l'envoi d'un message à destination de la deuxième unité centrale U2 afin de déclencher une deuxième commande C2 sur le premier dispositif D2.

Dans une étape ECsv7', un message de commande MC2' est envoyé à destination de la première unité centrale de commande U2 en vue de la réalisation de la commande C2.

Dans l'exemple représenté, nous supposons que le retour de cette deuxième commande correspond à un succès de la réalisation de la commande C2 avec un code de retour RC2, envoyé par l'unité centrale de commande U2 dans une étape ECU29'. Le serveur Sv peut stocker cette valeur de succès.

Dans une étape ECSv9', le service d'exécution définit une réponse RC à retourner à l'utilisateur suite au message de contrôle MC.

Etant donné qu'un code de retour, a été reçu pour chaque commande exécutée ou généré pour les commandes non autorisées, les résultats doivent être agrégés pour simuler un résultat global pour la commande groupée. En particulier, la commande groupée est considéré comme effectué si toutes les commandes C1, C2 ont été réalisés avec succès, et échoué si un ou plusieurs commandes ont échoué.

Dans le cas illustré à la figure 7, il peut être considéré que la commande groupée a échouée.

Cette réponse est communiquée à l'utilisateur Usr1 ou à l'application App1 qui la reçoit dans une étape ECUsr9' ou ECA9'.

Selon une variante, les codes de retour des commandes peuvent être notifiés au fur et à mesure de la réalisation des commandes à l'utilisateur ou à l'application.

### Variante du procédé de contrôle

Selon une variante du premier et du second exemple de mise en œuvre décrit sur les figures 10 et 11, un scenario préenregistré peut être déclenché en lieu et place d'une commande ou d'une commande groupée.

Par ailleurs, les figures 10 et 11 illustrent le cas d'une commande groupée. Toutefois, ces mêmes exemples sont applicables au cas d'une commande unique.

Selon une variante du premier et du second exemple de mise en œuvre décrit sur les figures 10 et 11, les étapes ECSv1 à ECSv10 ou respectivement ECVS1' à ECSv9' du procédé de contrôle mises en œuvre par le serveur peuvent être mis en œuvre par une unité centrale de commande pour ce qui concerne des commandes de dispositifs rattachés à ladite unité centrale de commande. Dans ce cas, le terminal se connecte en local à l'unité centrale de commande, et il convient qu'une distribution des informations concernant les associations entre une entité représentative et un ou plusieurs utilisateurs ait été réalisée entre le serveur et l'unité centrale de commande concernée.

### Troisième exemple de mise en œuvre - contrôle d'état ou configuration d'affichage

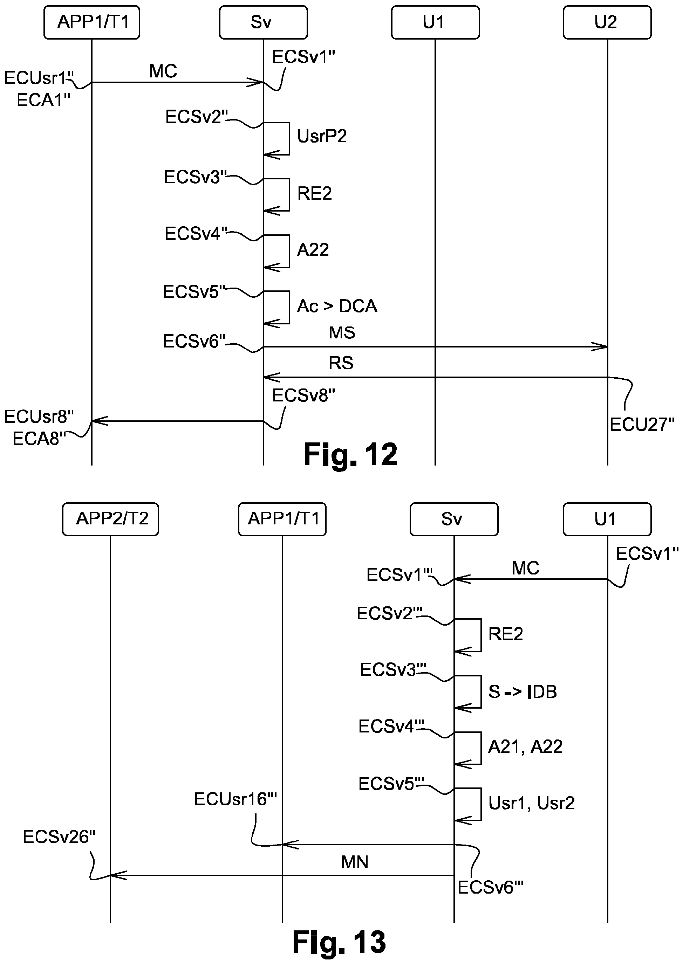

Un troisième exemple de mise en œuvre d'un procédé de contrôle selon l'invention est à présent décrit en référence à la figure 12. Nous supposerons que les étapes d'un procédé de configuration tel que décrit précédemment en référence aux figures 6 à 9 a été précédemment réalisé, de façon à obtenir une configuration d'entités représentatives, d'utilisateurs et d'associations telle que représentée sur la figure 5a.

Dans une EcSv1", le serveur reçoit un message de contrôle MC correspondant à une connexion d'un terminal utilisateur T1 en possession d'un utilisateur Usr1 au serveur Sv ou à la réception d'une indication qu'une connexion avec le terminal utilisateur T est établie. Le message de contrôle peut également correspondre à une demande de mise à jour ou de rafraîchissement de l'affichage.

Le message de contrôle correspond à une demande de configuration d'affichage.

Suite à la réception du message de contrôle, le serveur Sv sélectionne un profil utilisateur UsrP1 correspondant à l'utilisateur Usr1 dans un référentiel d'utilisateurs UsrRf dans une étape ECSv2".

Le serveur sélectionne également une entité représentative RE2 correspondant aux dispositifs concernés par les commandes C1 et C2 dans un référentiel d'entités représentatives dans une étape ECSv3".

Enfin, le serveur Sv sélectionne dans une étape ECSv4" une association A21 entre l'utilisateur Usr1 et l'entité représentative RE2 de l'installation concernée par le message de contrôle dans le référentiel d'associations ARf.

Sur la base de l'association A21 sélectionnée, il est possible de déterminer les attributs d'accès de l'utilisateur Usr1 sur l'installation 17 représentée par l'entité représentative A21.

En l'occurrence en reprenant l'exemple de la figure 5a, il apparaît que l'utilisateur Usr1 est propriétaire de l'installation, comme cela est indiqué par l'attribut AttrA21. L'attribut AttrC21 de profil de droits d'accès indique des droits d'accès complets.

En conséquence, dans une étape ECSv5", le serveur peut déterminer une ou plusieurs actions Ac à réaliser en fonction du message de contrôle MC et des attributs d'accès AttrA21 à AttrD21. En particulier, dans le cas d'une demande de configuration d'affichage, le serveur détermine une configuration d'affichage DCA définissant les éléments d'interface devant être affichés sur l'interface utilisateur du terminal T1.

La configuration d'affichage DCA définit, en en fonction des attributs d'accès Attr de l'association A liant un utilisateur Usr donné et une entité représentative RE, les éléments d'interface correspondant :
- aux commandes C, commandes groupées, scénario pouvant être déclenchés par un utilisateur Usr et/ou
- aux valeurs de variables d'état S de dispositifs domotiques D pouvant être visualisée par un utilisateur Usr en fonction de l'au moins un attribut d'accès.

Une association par défaut pour un utilisateur connecté par l'intermédiaire du terminal utilisateur T peut être définie également en fonction des attributs Attr des associations reliées à l'utilisateur Usr1.

Le serveur peut, dans une étape ECSv6", interroger les unités centrales de commande U1, U2 pour obtenir des valeurs de variables d'états S qui lui sont retournées dans une étape ECU27". Alternativement, il est également possible que le serveur Sv interroge une base de données d'instances stockant les valeurs des variables d'états S des dispositifs D. Sur la figure 12, seule une requête est représentée vers une unité centrale de commande U. Il est toutefois possible que plusieurs requêtes soient envoyées vers plusieurs unités centrales de commandes U1, U2.

Puis, dans une étape ultérieure, le serveur Sv envoie d'au moins un message de configuration d'affichage DCA au terminal T1.

Des messages peuvent être envoyés périodiquement afin de rafraîchir l'affichage du terminal. Le terminal utilisateur peut ainsi afficher une interface présentant à l'utilisateur les dispositifs et leurs états ou les commandes disponibles en appliquant, au niveau de l'unité de gestion, un filtre correspondant à l'au moins un attribut d'accès Attr1C.

Ces dispositions correspondent à un mode de supervision actif, dans lequel le terminal utilisateur T1 envoie un message correspondant à une demande explicite concernant l'état d'un ou de plusieurs dispositifs domotiques au serveur Sv. Le serveur Sv communique les valeurs des variables d'états en prenant en compte un filtre correspondant à l'attribut de profil de droits d'accès Attr21C associés à l'utilisateur Usr1.

### Procédé de supervision

Un exemple de mise en œuvre d'un procédé de supervision selon l'invention est à présent décrit en référence à la figure 13. Nous supposerons que les étapes d'un procédé de configuration tel que décrit précédemment en référence aux figures 6 à 9 a été précédemment réalisé, de façon à obtenir une configuration d'entités représentatives, d'utilisateurs et d'associations telle que représentée sur la figure 5a.

Dans une EcSv1''', le serveur reçoit un message de notification d'état MS en provenance d'une unité centrale de commande U1 d'une installation domotique 17 contenant une indication concernant au moins une variable d'état S d'un dispositif domotique D.

Dans une étape ECSv2''', le serveur sélectionne une entité représentative RE2 correspondant au dispositif D concerné dans un référentiel d'entités représentatives dans une étape ECSv2".

Dans une étape ECSv3''', le serveur peut réaliser une mise à jour d'une valeur correspondant à la variable d'état dans un référentiel d'instances, afin de disposer ce cette valeur pour un usage ultérieur, par exemple pour répondre à une requête de mise à jour en provenance d'un terminal T telle que décrite dans le troisième mode de mise en œuvre du procédé de contrôle décrit précédemment.

Ensuite, le serveur Sv sélectionner dans une étape ECSv4''' les associations A21 et A22 impliquant l'entité représentative RE2 de l'installation concernées par le message de contrôle dans le référentiel d'associations ARf.

Le serveur Sv sélectionne les profils utilisateurs UsrP1, UsrP2 correspondant aux utilisateurs concernés par les associations A21 et A22 identifiées précédemment dans un référentiel d'utilisateurs UsrRf dans une étape ECSv5'''.

Sur la base des associations A21, A22 sélectionnées, il est possible de déterminer les attributs d'accès des utilisateurs Usr1, Usr2 sur l'installation 17 représentée par l'entité représentative RE2 et ainsi de déterminer s'ils sont autorisés à recevoir des notifications concernant la variable d'état S. Le serveur peut ainsi communiquer les valeurs des variables d'états en prenant en compte un filtre correspondant aux attributs d'accès associés à l'utilisateur pour le dispositif considéré.

Nous supposerons dans ce cas que les deux utilisateurs Usr1 et Usr2 sont autorisés par leurs profils d'accès Attr1C et Attr2C à visualiser les valeurs de la variable d'état S.

Dans une étape ECSv6''', le serveur Sv envoie d'au moins un message de notification MN à destination des terminaux utilisateurs T1 et T2 concernant la valeur de la variable d'état S. Dans le cas par exemple ou l'utilisateur Usr2 n'aurait pas eu un profil de droit d'accès lui permettant de visualiser les valeurs de la variable d'état S, seul un message de notification MN aurait été envoyé vers le terminal utilisateur T1.

Un mode de supervision évènementiel peut être ainsi mis en oeuvre, dans lequel un utilisateur est abonné à certains événements, par exemple le changement de valeurs de variables d'état.

Les procédés de configuration, de contrôle et de supervision ont été décrits en référence à une exécution par un serveur. Bien entendu, ces procédés peuvent être mis en œuvre par un autre type d'unité de gestion, en particulier par une unité centrale destinée à être reliée à une ou plusieurs unités centrales de commande sur des réseaux privés ou locaux distincts, ou encore sur le même réseau local.

## Revendications

1. Procédé de configuration d'une installation domotique (17) comprenant au moins un dispositif domotique (D) et au moins une unité centrale de commande (U) le procédé étant exécuté par une unité de gestion (Sv) connectée à l'au moins une installation domotique (17) ou par l'au moins une unité centrale de commande (U) et comprenant les étapes suivantes :
i. Réception (ELRSv14, ELRSv26, ERSv1) d'au moins un message de configuration (Mcf) depuis un terminal utilisateur (T) et/ou depuis l'au moins une unité centrale de commande (U) ; l'au moins un message de configuration concernant au moins un attribut d'accès (Attr) d'un utilisateur (Usr) à au moins un dispositif domotique (D) de l'installation (17) ;
ii. Sélection (ELRSv15, ELRSv27, ERSv2) d'un profil utilisateur (UsrP) correspondant à l'utilisateur concerné (Usr), ledit profil utilisateur (UsrP) étant enregistré dans un référentiel d'utilisateurs (UsrRf) ; ou création d'un nouveau profil d'utilisateur (UsrP) correspondant à l'utilisateur (Usr) concerné dans le cas d'une absence de profil utilisateur dans le référentiel d'utilisateurs (UsrRf) ;
iii. Sélection (ELRSv16, ELRSv28, ERSv3) d'une entité représentative (RE) de l'au moins un dispositif domotique (D), l'entité représentative (RE) étant enregistrée dans un référentiel d'entités représentatives (RERf) ; ou création d'une nouvelle entité représentative (RE) de l'au moins un dispositif domotique (D) dans le cas d'une absence d'entité représentative dans le référentiel d'entités représentative (RERf) ;
iv. Sélection (ELRSv17, ELRSv29, ERSv4) d'une association (A) entre l'au moins un profil utilisateur (UsrP) et l'au moins une entité représentative (RE) dans un référentiel d'associations (ARf) dans lequel sont enregistrées les instances d'associations, et mise à jour de l'au moins un attribut d'accès (Attr) ; ou création d'une nouvelle association (A) entre l'au moins un profil utilisateur (UsrP) et l'au moins une entité représentative (RE), l'au moins un attribut d'accès (Attr) étant affecté à ladite association (A).

2. Procédé selon la revendication 1, comprenant une première étape de création (ELRSv17) d'une première association (A21) entre au moins un premier profil utilisateur (UsrP1) et au moins une première entité représentative (RE2) d'au moins un dispositif (D), au moins un premier attribut d'accès (Attr1) étant rattaché à ladite première association (A21) et une deuxième étape de création (ELRSv29) d'une deuxième association (A22) entre au moins un second utilisateur (Usr2) et la première entité représentative (RE1) ou une deuxième entité représentative (RE2) comprenant au moins un dispositif (D) en commun avec la première entité représentative (RE1) ; au moins un second attribut d'accès (Attr2) étant rattaché à ladite deuxième association (A2).

3. Procédé selon la revendication 2, dans lequel une période de validité(VP22) est rattachée à la deuxième association (A22), dans lequel l'au moins un second attribut d'accès (Attr2) définit un droit d'accès non-exclusif d'accès au second utilisateur (Usr2) sur ledit dispositif commun (D) pendant la période de validité (VP22), et dans lequel l'au moins un premier attribut d'accès (Attr1) définit un accès non-exclusif pour le premier utilisateur (Usr1) pendant la période de validité (VP22).

4. Procédé selon la revendication 3, dans lequel une période de validité (VP22) est rattachée à la deuxième association (A22), et dans lequel l'au moins un second attribut d'accès (Attr2) définit un droit d'accès exclusif d'accès au second utilisateur (Usr2) sur ledit dispositif commun (D) pendant la période de validité (VP22), l'au moins un premier attribut d'accès (Attr1) correspondant à une interdiction d'accès pour le premier utilisateur (Usr1) pendant la période de validité (VP22).

5. Procédé selon l'une des revendications 1 ou 2, dans lequel l'au moins un attribut d'accès (Attr) comprend au moins un des éléments suivants :
- Un indicateur de propriété (AttrA) ;
- Un libellé d'installation (AttrB) ;
- Un profil de droits d'accès (AttrC) ; ou
- Un indicateur d'installation par défaut (AttrD).

6. Procédé selon la revendication 5, dans lequel le profil de droits d'accès (AttrC) correspond à un profil de droit d'accès prédéfini et/ou à une liste de droits d'accès sur des dispositifs ou des groupes de dispositifs rattachés à une entité représentative.

7. Procédé de configuration selon l'une des revendications 1 à 5 comprenant en outre les étapes suivantes :
- Envoi (ELRSv22, ELRSv23) d'au moins un message de distribution (MD) concernant la création ou la mise à jour de l'au moins une association à destination d'au moins une unité centrale de commande (U) appartenant à l'installation (17) correspondant à l'entité représentative (RE1) d'au moins un dispositif (D) concerné par l'association.

8. Procédé de configuration selon la revendication 1 comprenant en outre les étapes suivantes :
- Détermination (ELRSv23) d'une configuration d'affichage (CA) concernant au moins une commande (C) sur au moins un dispositif domotique (D) pouvant être déclenchée par un utilisateur et/ou au moins une variable d'état (S) d'un dispositif domotique pouvant être visualisée par un utilisateur (Usr) en fonction de l'au moins un attribut d'accès.
- Envoi d'au moins un message de configuration d'affichage (MCA) concernant ladite configuration d'affichage (CA) à destination d'un terminal utilisateur (T).

9. Procédé de contrôle d'une installation domotique (17), le procédé étant exécuté par une unité de gestion (Sv) connectée à l'au moins une installation domotique (17) ou par une unité centrale de commande (U) et comprenant les étapes suivantes :
i. Réception (ECSv1, ECSv1', ECSv1") d'un message de contrôle (MC) en provenance d'un terminal utilisateur (T) ou d'une application (A) sur l'unité de gestion (Sv) ou sur une autre unité de gestion connectée, le message de contrôle concernant un utilisateur (Usr1) et au moins un dispositif domotique (D) de l'installation (17) ;
ii. Sélection (ECSv2, ECSv2', ECSv2") d'un profil utilisateur (UsrP) correspondant à l'utilisateur concerné (Usr) dans un référentiel d'utilisateurs (UsrRf), les instance d'utilisateurs étant enregistrée dans le référentiel d'utilisateurs (UsrRf);
iii. Sélection (ECSv3, ECSv3', ECSv3") d'une entité représentative (RE) de l'au moins un dispositif domotique (D) dans un référentiel d'entités représentatives (RERf), les instance d'entités représentatives étant enregistrées dans le référentiel d'entités représentatives (RERf) ;
iv. Sélection (ECSv4, ECSv4', ECSv4") d'une association (A) entre l'au moins un utilisateur (UsrP) et l'au moins une entité représentative dans un référentiel d'associations (ARf), les instances d'associations étant enregistrées dans le référentiel d'associations (ARf);
v. Détermination (ECSv5, ECSv5', ECSv5") d'au moins une action (Ac) à réaliser en fonction du message de contrôle (MC) et d'au moins un attribut d'accès (Attr) rattaché à l'association (A) ;
vi. Déclenchement (ECSv6, ECSv8, ECSv10, ECSv6', ECSv7', ECSv9') de l'exécution de l'au moins une action (Ac) si l'au moins un attribut d'accès (Attr) définit une autorisation de ladite action (Ac) ; ou Absence de déclenchement de l'exécution de l'au moins une action (Ac) si l'au moins un attribut d'accès (Attr) définit une absence d'autorisation de ladite action (Ac).

10. Procédé selon la revendication 9, dans lequel l'étape de réception d'au moins un message de contrôle correspond à une demande de réalisation d'une commande (C), d'une commande ou groupée ou du déclenchement d'un scénario en provenance d'un terminal utilisateur (T).

11. Procédé selon la revendication 9, dans lequel l'étape de réception d'au moins un message de contrôle correspond à une connexion du terminal utilisateur à l'unité de gestion (Sv) ou à l'unité centrale de commande (U) ou à la réception d'une indication qu'une connexion avec le terminal utilisateur (T) est établie ou à une demande de mise à jour par le terminal utilisateur (T) ; et
dans lequel l'action à réaliser correspond à l'envoi au terminal utilisateur (T) :
- d'au moins un message de configuration d'affichage (DC) concernant au moins une commande sur au moins un dispositif domotique (D) pouvant être déclenchée par un utilisateur et/ou au moins une valeur d'une variable d'état (S) d'un dispositif domotique pouvant être visualisée par un utilisateur (Usr) en fonction de l'au moins un attribut d'accès.

12. Procédé selon la revendication 11, comprenant une étape de sélection d'au moins une association par défaut pour un utilisateur connecté par l'intermédiaire du terminal utilisateur (T).

13. Procédé de supervision d'une installation domotique (17), le procédé étant exécuté par une unité de gestion (Sv) connectée à l'au moins une installation domotique (17) ou par une unité centrale de commande (U) et comprenant les étapes suivantes :
i. Réception (ECSv1'") d'un message de notification d'état (MS) en provenance d'une unité centrale de commande (U) d'une installation domotique (17) contenant une indication concernant au moins une variable d'état (S) d'un dispositif domotique (D) ou une indication concernant la réalisation d'une commande (C);
ii. Sélection (ECSv2"') d'une entité représentative (RE) de l'au moins un dispositif domotique (D) enregistrée dans un référentiel d'entités représentatives (RERf) ;
iii. Sélection (ECSv4"') d'au moins une association (A) entre l'au moins une entité représentative et au moins un utilisateur (UsrP), ladite association (A) étant enregistrée dans un référentiel d'associations ;
iv. Sélection (ECSv5'") de l'au moins un profil utilisateur (UsrP) correspondant à l'au moins une association (A), le profil d'utilisateur (UsrP) étant enregistré dans un référentiel d'utilisateurs (UsrRf) ;
v. Détermination (ECSv5'") d'une autorisation de notification pour l'au moins un profil utilisateur (UsrP) en fonction du message de notification d'état (MS) et d'au moins un attribut d'accès (Attr) rattaché à l'association (A) ;
vi. Envoi (ECSv6"') d'au moins un message de notification d'état (MN) à destination d'un terminal utilisateur (T) en possession d'un utilisateur (UsrP) correspondant au profil utilisateur (UsrP) concernant ladite variable d'état (S) d'un dispositif domotique (D) ou ladite réalisation d'une commande (C) si l'au moins un attribut d'accès (Attr) définit une autorisation de notification.

14. Procédé selon l'une des revendications 9 à 13, dans lequel une période de validité (VP) est rattachée à l'au moins une association (A), l'au moins un attribut d'accès (Attr) définissant un droit d'accès pendant la période de validité (VP).

15. Procédé selon l'une des revendications 9 à 14, dans lequel l'au moins un attribut d'accès (Attr) comprend au moins un des éléments suivants :
- Un indicateur de propriété (AttrA) ;
- Un libellé d'installation (AttrB) ;
- Un profil de droits d'accès (AttrC) ; ou
- Un indicateur d'installation par défaut (AttrD).

16. Procédé selon la revendication 15, dans lequel le profil de droits d'accès (AttrC) correspond à un profil de droit d'accès prédéfini et/ou à une liste de droits d'accès sur des dispositifs ou des groupes de dispositifs rattachés à une entité représentative.

## Patentansprüche

1. Verfahren zur Konfiguration einer Heimautomationsanlage (17), mindestens eine Heimautomationsvorrichtung (D) und mindestens eine Zentralsteuereinheit (U) umfassend, wobei das Verfahren durch eine Verwaltungseinheit (Sv), die mit der mindestens einen Heimautomationsanlage (17) verbunden ist, oder durch die mindestens eine Zentralsteuereinheit (U) ausgeführt wird, und die folgenden Schritte umfasst:
i. Empfangen (ELRSv14, ELRSv26, ERSv1) mindestens einer Konfigurationsnachricht (Mcf) von einem Benutzerendgerät (T) und/oder der mindestens einen Zentralsteuereinheit (U); wobei die mindestens eine Konfigurationsnachricht mindestens ein Zugangsattribut (Attr) eines Benutzers (Usr) zu mindestens einer Heimautomationsvorrichtung (D) der Anlage (17) betrifft;
ii. Auswählen (ELRSv15, ELRSv27, ERSv2) eines Benutzerprofils (UsrP) entsprechend dem betroffenen Benutzer (Usr), wobei das Benutzerprofil (UsrP) in einem Bezugsrahmen von Benutzern (UsrRf) gespeichert ist; oder Erstellen eines neuen Benutzerprofils (UsrP) entsprechend einem betroffenen Benutzer (Usr) im Falle eines Nichtbestehens eines Benutzerprofils in dem Bezugsrahmen von Benutzern (UsrRf);
iii. Auswählen (ELRSv16, ELRSv28, ERSv3) einer repräsentativen Einheit (RE) der mindestens einen Heimautomationsvorrichtung (D), wobei die repräsentative Einheit (RE) in einem Bezugsrahmen repräsentativer Einheiten (RERf) gespeichert ist; oder Erstellen einer neuen repräsentativen Einheit (RE) der mindestens einen Heimautomationsvorrichtung (D) im Falle eines Nichtbestehens einer repräsentativen Einheit in dem Bezugsrahmen repräsentativer Einheiten (RERf);
iv. Auswählen (ELRSv17, ELRSv29, ERSv4) einer Zuordnung (A) zwischen dem mindestens einen Benutzerprofil (UsrP) und der mindestens einen repräsentativen Einheit (RE) in einem Bezugsrahmen von Zuordnungen (ARf), in dem die Zuordnungsinstanzen gespeichert sind, und Aktualisieren des mindestens einen Zugangsattributs (Attr); oder Erstellen einer neuen Zuordnung (A) zwischen dem mindestens einen Benutzerprofil (UsrP) und der mindestens einen repräsentativen Einheit (RE), wobei das mindestens eine Zugangsattribut (Attr) der Zuordnung (A) zugeteilt ist.

2. Verfahren nach Anspruch 1, einen ersten Erstellungsschritt (ELRSv17) einer ersten Zuordnung (A21) zwischen mindestens einem ersten Benutzerprofil (UsrP1) und mindestens einer ersten repräsentativen Einheit (RE2) mindestens einer Vorrichtung (D) umfassend, wobei mindestens ein erstes Zugangsattribut (Attr1) mit der ersten Zuordnung (A21) verknüpft ist, und einen zweiten Erstellungsschritt (ELRSv29) einer zweiten Zuordnung (A22) zwischen mindestens einem zweiten Benutzer (Usr2) und der ersten repräsentativen Einheit (RE1) oder einer zweiten repräsentativen Einheit (RE2), mindestens eine Vorrichtung (D) gemeinsam mit der ersten repräsentativen Einheit (RE1) umfassend; wobei mindesten ein zweites Zugangsattribut (Attr2) mit der zweiten Zuordnung (A2) verknüpft ist.

3. Verfahren nach Anspruch 2, wobei ein Geltungszeitraum (VP22) mit der zweiten Zuordnung (A22) verknüpft ist, wobei das mindestens eine zweite Zugangsattribut (Attr2) ein nicht exklusives Zugangsrecht für den Zugang des zweiten Benutzers (Usr2) zu der gemeinsamen Vorrichtung (D) während des Geltungszeitraums (VP22) definiert, und wobei das mindestens eine erste Zugangsattribut (Attr1) einen nicht exklusiven Zugang für den ersten Benutzer (Usr1) während des Geltungszeitraums (VP22) definiert.

4. Verfahren nach Anspruch 3, wobei ein Geltungszeitraum (VP22) mit der zweiten Zuordnung (A22) verknüpft ist, und wobei das mindestens eine zweite Zugangsattribut (Attr2) ein exklusives Zugangsrecht für den Zugang des zweiten Benutzers (Usr2) zu der gemeinsamen Vorrichtung (D) während des Geltungszeitraums (VP22) definiert, wobei das mindestens eine erste Zugangsattribut (Attr1) einem Zugangsverbot für den ersten Benutzer (Usr1) während des Geltungszeitraums (VP22) entspricht.

5. Verfahren nach einem der Ansprüche 1 oder 2, wobei das mindestens eine Zugangsattribut (Attr1) mindestens eines der folgenden Elemente umfasst:
- einen Eigentumsindikator (AttrA);
- eine Anlagenformulierung (AttrB);
- ein Zugangsrechtsprofil (AttrC); oder
- einen Standard-Anlagenindikator (AttrD).

6. Verfahren nach Anspruch 5, wobei das Zugangsrechtsprofil (AttrC) einem vordefinierten Zugangsrechtsprofil und/oder einer Liste mit Zugangsrechten zu den Vorrichtungen oder Vorrichtungsgruppen entspricht, die mit einer repräsentativen Einheit verknüpft sind.

7. Verfahren zur Konfiguration nach einem der Ansprüche 1 bis 5, weiter die folgenden Schritte umfassend:
- Senden (ELRSv22, ELRSv23) mindestens einer Verteilungsnachricht (MD) betreffend die Erstellung oder die Aktualisierung der mindestens einen Zuordnung an mindestens eine Zentralsteuereinheit (U), die der Anlage (17) angehört, die der repräsentativen Einheit (RE1) mindestens einer von der Zuordnung betroffenen Vorrichtung (D) entspricht.

8. Verfahren zur Konfiguration nach Anspruch 1, weiter die folgenden Schritte umfassend:
- Bestimmen (ELRSv23) einer Anzeigekonfiguration (CA) entsprechend mindestens einer Steuerung (C) an mindestens einer Heimautomationsvorrichtung (D), die durch einen Benutzer und/oder mindestens eine Zustandsvariable (S) einer Heimautomationsvorrichtung ausgelöst werden kann, die durch einen Benutzer (Usr) in Abhängigkeit von dem mindestens einen Zugangsattribut visualisiert werden kann.
- Senden mindestens einer Anzeigekonfigurationsnachricht (MCA) betreffend die Anzeigekonfiguration (CA) an ein Benutzerendgerät (T).

9. Verfahren zur Kontrolle einer Heimautomationsanlage (17), wobei das Verfahren durch eine Verwaltungseinheit (Sv), die mit mindestens einer Heimautomationsanlage (17) verbunden ist, oder durch eine Zentralsteuereinheit (U) ausgeführt wird, und die folgenden Schritte umfasst:
i. Empfangen (ECSv1, ECSv1', ECSv1") einer Kontrollnachricht (MC) von einem Benutzerendgerät (T) oder einer Applikation (A) in der Verwaltungseinheit (Sv) oder einer anderen verbundenen Verwaltungseinheit, wobei die Kontrollnachricht einen Benutzer (Usr1) und mindestens eine Heimautomationsvorrichtung (D) der Anlage (17) betrifft;
ii. Auswählen (ECSv2, ECSv2', ECSv2") eines Benutzerprofils (UsrP) entsprechend dem betroffenen Benutzer (Usr) in einem Bezugsrahmen von Benutzern (UsrRf), wobei die Benutzerinstanz in dem Bezugsrahmen von Benutzern (UsrRf) gespeichert ist;
iii. Auswählen (ECSv3, ECSv3', ECSv3") einer repräsentativen Einheit (RE) der mindestens einen Heimautomationsvorrichtung (D) in einem Bezugsrahmen repräsentativer Einheiten (RERf), wobei die Instanz repräsentativer Einheiten in dem Bezugsrahmen repräsentativer Einheiten (RERf) gespeichert sind;
iv. Auswählen (ECSv4, ECSv4', ECSv4") einer Zuordnung (A) zwischen dem mindestens einen Benutzer (UsrP) und der mindestens einen repräsentativen Einheit in einem Bezugsrahmen von Zuordnungen (ARf), wobei die Zuordnungsinstanzen in dem Bezugsrahmen von Zuordnungen (ARf) gespeichert sind;
v. Bestimmen (ECSv5, ECSv5', ECSv5") mindestens einer Aktion (Ac), die in Abhängigkeit von der Kontrollnachricht (MC) und mindestens einem Zugangsattribut (Attr), das mit der Zuordnung (A) verknüpft ist, durchzuführen ist;
vi. Auslösen (ECSv6, ECSv8, ECSv10, ECSv6', ECSv7', ECSv9') der Ausführung der mindestens einen Aktion (Ac), wenn das mindestens eine Zugangsattribut (Attr) eine Genehmigung der Aktion (Ac) definiert; oder Nichtbestehen einer Auslösung der Ausführung der mindestens einen Aktion (Ac) falls das mindestens eine Zugangsattribut (Attr) ein Nichtbestehen einer Genehmigung der Aktion (Ac) definiert.

10. Verfahren nach Anspruch 9, wobei der Schritt des Empfangens mindestens einer Kontrollnachricht einer Anfrage zur Durchführung einer Steuerung (C), einer Steuerung oder gruppierten oder der Auslösung eines Szenarios von einem Benutzerendgerät (T) entspricht.

11. Verfahren nach Anspruch 9, wobei der Schritt des Empfangens mindestens einer Kontrollnachricht einer Verbindung des Benutzerendgeräts mit der Verwaltungseinheit (Sv) oder der Zentralsteuereinheit (U) oder dem Empfang eines Hinweises, dass eine Verbindung mit dem Benutzerendgerät (T) hergestellt ist, oder einer Anfrage zur Aktualisierung durch das Benutzerendgerät (T) entspricht; und
wobei die durchzuführende Aktion dem Senden von Folgendem zum Benutzerendgerät (T) entspricht:
- mindestens einer Anzeigekonfigurationsnachricht (DC) betreffend mindestens eine Steuerung in mindestens einer Heimautomationsvorrichtung (D), die durch einen Benutzer und/oder mindestens einen Wert einer Zustandsvariablen (S) einer Heimautomationsvorrichtung ausgelöst werden kann, die durch einen Benutzer (Usr) in Abhängigkeit von dem mindestens einen Zugangsattribut visualisiert werden kann.

12. Verfahren nach Anspruch 11, umfassend einen Auswahlschritt mindestens einer Standard-Zuordnung für einen verbundenen Benutzer über das Benutzerendgerät (T).

13. Verfahren zur Überwachung einer Heimautomationsanlage (17), wobei das Verfahren durch eine Verwaltungseinheit (Sv), die mit mindestens einer Heimautomationsanlage (17) verbunden ist, oder durch eine Zentralsteuereinheit (U) ausgeführt wird, und die folgenden Schritte umfasst:
i. Empfangen (ECSv1'") einer Zustandsmitteilungsnachricht (MS) von einer Zentralsteuereinheit (U) einer Heimautomationsanlage (17), einen Hinweis betreffend mindestens eine Zustandsvariable (S) einer Heimautomationsvorrichtung (D) oder einen Hinweis betreffend die Realisierung einer Steuerung (C) enthaltend;
ii. Auswählen (ECSv2"') einer repräsentativen Einheit (RE) der mindestens einen Heimautomationsvorrichtung (D), die in einem Bezugsrahmen repräsentativer Einheiten (RERf) gespeichert ist;
iii. Auswählen (ECSv4"') mindestens einer Zuordnung (A) zwischen der mindestens einen repräsentativen Einheit und mindestens einem Benutzer (UsrP), wobei die Zuordnung (A) in einem Bezugsrahmen von Zuordnungen gespeichert ist;
iv. Auswählen (ECSv5"') mindestens eines Benutzerprofils (UsrP) entsprechend der mindestens einen Zuordnung (A), wobei das Benutzerprofil (UsrP) in einem Bezugsrahmen von Benutzern (UsrRf) gespeichert ist;
v. Bestimmen (ECSv5"') einer Mitteilungsgenehmigung für das mindestens eine Benutzerprofil (UsrP) in Abhängigkeit von der Zustandsmitteilungsnachricht (MS) und mindestens eines Zugangsattributs (Attr), das mit der Zuordnung (A) verknüpft ist;
vi. Senden (ECSv6"') mindestens einer Zustandsmitteilungsnachricht (MN) an ein Benutzerendgerät (T) in Besitz eines Benutzers (UsrP), entsprechend dem Benutzerprofil (UsrP) betreffend die Zustandsvariable (S) einer Heimautomationsvorrichtung (D), oder die Realisierung einer Steuerung (C), falls das mindestens eine Zugangsattribut (Attr) eine Mitteilungsgenehmigung definiert.

14. Verfahren nach einem der Ansprüche 9 bis 13, wobei ein Geltungszeitraum (VP) mit der mindestens einen Zuordnung (A) verknüpft ist, wobei das mindestens eine Zugangsattribut (Attr) ein Zugangsrecht während des Geltungszeitraums (VP) definiert.

15. Verfahren nach einem der Ansprüche 9 bis 14, wobei das mindestens eine Zugangsattribut (Attr) mindestens eines der folgenden Elemente umfasst:
- einen Eigentumsindikator (AttrA);
- eine Anlagenformulierung (AttrB);
- ein Zugangsrechtsprofil (AttrC); oder
- einen Standard-Anlagenindikator (AttrD).

16. Verfahren nach Anspruch 15, wobei das Zugangsrechtsprofil (AttrC) einem vordefinierten Zugangsrechtsprofil und/oder einer Liste mit Zugangsrechten zu den Vorrichtungen oder Vorrichtungsgruppen entspricht, die mit einer repräsentativen Einheit verknüpft sind.

## Claims

1. A method for configuring a home automation installation (17) comprising at least one home automation device (D) and at least one central control unit (U), the method being executed by a management unit (Sv) connected to the at least one home automation installation (17) or by the at least one central control unit (U) and comprising the following steps:
i. Receiving (ELRSv14, ELRSv26, ERSv1) at least one configuration message (Mcf) from a user terminal (T) and/or from the at least one central control unit (U); the at least one configuration message concerning at least one access attribute (Attr) of a user (Usr) to at least one home automation device (D) of the installation (17);
ii. Selecting (ELRSv15, ELRSv27, ERSv2) a user profile (UsrP) corresponding to the concerned user (Usr), said user profile (UsrP) being recorded in a user repository (UsrRf); or creating a new user profile (UsrP) corresponding to the concerned user (Usr) in the case of an absence of a user profile in the user repository (UsrRf);
iii. Selecting (ELRSv16, ELRSv28, ERSv3) a representative entity (RE) of the at least one home automation device (D), the representative entity (RE) being recorded in a representative entity repository (RERf); or creating a new representative entity (RE) of the at least one home automation device (D) in the case of an absence of a representative entity in the representative entity repository (RERf);
iv. Selecting (ELRSv17, ELRSv29, ERSv4) an association (A) between the at least one user profile (UsrP) and the at least one representative entity (RE) in an association repository (ARf) in which the association instances are recorded, and updating the at least one access attribute (Attr); or creating a new association (A) between the at least one user profile (UsrP) and the at least one representative entity (RE), the at least one access attribute (Attr) being assigned to said association (AT).

2. The method according to claim 1, comprising a first step of creation (ELRSv17) of a first association (A21) between at least one first user profile (UsrP1) and at least one first representative entity (RE2) of at least one device (D), at least one first access attribute (Attr1) being attached to said first association (A21) and a second step of creation (ELRSv29) of a second association (A22) between at least one second user (Usr2) and the first representative entity (RE1) or a second representative entity (RE2) comprising at least one device (D) in common with the first representative entity (RE1); at least one second access attribute (Attr2) being attached to said second association (A2).

3. The method according to claim 2, wherein a validity period (VP22) is attached to the second association (A22), wherein the at least one second access attribute (Attr2) defines a non-exclusive access right to access the second user (Usr2) on said common device (D) during the validity period (VP22), and wherein the at least one first access attribute (Attr1) defines a non-exclusive access for the first user (Usr1) during the validity period (VP22).

4. The method according to claim 3, wherein a validity period (VP22) is attached to the second association (A22), and wherein the at least one second access attribute (Attr2) defines an exclusive access right to access the second user (Usr2) on said common device (D) during the validity period (VP22), the at least one first access attribute (Attr1) corresponding to an access barring for the first user (Usr1) during the validity period (VP22).

5. The method according to any of claims 1 or 2, wherein the at least one access attribute (Attr) comprises at least one of the following elements:
- A property indicator (AttrA);
- An installation label (AttrB);
- An access right profile (AttrC); or
- A default installation indicator (AttrD).

6. The method according to claim 5, wherein the access right profile (AttrC) corresponds to a predefined access right profile and/or to a list of access rights on devices or groups of devices attached to a representative entity.

7. A configuration method according to any of claims 1 to 5 further comprising the following steps:
- Sending (ELRSv22, ELRSv23) at least one distribution message (MD) concerning the creation or the update of the at least one association to the at least one central control unit (U) belonging to the installation (17) corresponding to the representative entity (RE1) of at least one device (D) which is concerned by the association.

8. The configuration method according to claim 1, further comprising the following steps:
- Determining (ELRSv23) a display configuration (CA) concerning at least one command (C) on at least one home automation device (D) which can be triggered by a user and/or at least one state variable (S) of a home automation device which can be viewed by a user (Usr) depending on the at least one access attribute.
- Sending at least one display configuration message (MCA) concerning said display configuration (CA) to a user terminal (T).

9. The method for monitoring a home automation installation (17), the method being executed by a management unit (Sv) connected to the at least one home automation installation (17) or by a central control unit (U) and comprising the following steps:
i. Receiving (ECSv1, ECSv1', ECSv1") a monitoring message (MC) coming from a user terminal (T) or from an application (A) on the management unit (Sv) or on another connected management unit, the monitoring message concerning a user (Usr1) and at least one home automation device (D) of the installation (17);
ii. Selecting (ECSv2, ECSv2', ECSv2") a user profile (UsrP) corresponding to the concerned user (Usr) in a user repository (UsrRf), the user instances being recorded in the user repository (UsrRf);
iii. Selecting (ECSv3, ECSv3', ECSv3") a representative entity (RE) of the at least one home automation device (D) in a representative entity repository (RERf), the instances of representative entities being recorded in the representative entity repository (RERf);
iv. Selecting (ECSv4, ECSv4', ECSv4") an association (A) between the at least one user (UsrP) and the at least one representative entity in an association repository (ARf), the association instances being recorded in the association repository (ARf);
v. Determining (ECSv5, ECSv5', ECSv5") at least one action (Ac) to be carried out depending on the monitoring message (MC) and at least one access attribute (Attr) attached to the association (A);
vi. Triggering (ECSv6, ECSv8, ECSv10, ECSv6', ECSv7', ECSv9') the execution of the at least one action (Ac) if the at least one access attribute (Attr) defines an authorization of said action (Ac); or Absence of triggering of the execution of the at least one action (Ac) if the at least one access attribute (Attr) defines an absence of authorization of said action (Ac).

10. The method according to claim 9, wherein the step of receiving at least one monitoring message corresponds to a request for carrying out a command (C), a grouped command or the triggering of a scenario from a user terminal (T).

11. The method according to claim 9, wherein the step of receiving at least one monitoring message corresponds to a connection of the user terminal to the management unit (Sv) or to the central control unit (U) or upon receiving an indication that a connection with the user terminal (T) is established or to an update request by the user terminal (T); and
wherein the action to be carried out corresponds to sending to the user terminal (T):
- at least one display configuration message (DC) concerning at least one command on at least one home automation device (D) which can be triggered by a user and/or at least one value of a state variable (S) of a home automation device that can be viewed by a user (Usr) depending on the at least one access attribute.

12. The method according to claim 11, comprising a step of selecting at least one default association for a user connected via the user terminal (T).

13. The method for supervising a home automation installation (17), the method being executed by a management unit (Sv) connected to the at least one home automation installation (17) or by a central control unit (U) and comprising the following steps:
i. Receiving (ECSv1'") a state notification message (MS) from a central control unit (U) of a home automation installation (17) containing an indication concerning at least one state variable (S) of a home automation device (D) or an indication concerning the realization of a command (C);
ii. Selecting (ECSv2"') a representative entity (RE) of the at least one home automation device (D) recorded in a representative entity repository (RERf);
iii. Selecting (ECSv4"') at least one association (A) between the at least one representative entity and at least one user (UsrP), said association (A) being recorded in an association repository;
iv. Selecting (ECSv5"') the at least one user profile (UsrP) corresponding to the at least one association (A), the user profile (UsrP) being recorded in a user repository (UsrRf);
v. Determining (ECSv5"') a notification authorization for the at least one user profile (UsrP) depending on the state notification message (MS) and at least one access attribute (Attr) attached to association (A);
vi. Sending (ECSv6"') at least one state notification message (MN) to a user terminal (T) in possession of a user (UsrP) corresponding to the user profile (UsrP) concerning said state variable (S) of a home automation device (D) or said realization of a command (C) if the at least one access attribute (Attr) defines a notification authorization.

14. The method according to any of claims 9 to 13, wherein a validity period (VP) is attached to the at least one association (A), the at least one access attribute (Attr) defining a right access during the validity period (VP).

15. The method according to any of claims 9 to 14, wherein the at least one access attribute (Attr) comprises at least one of the following elements:
- A property indicator (AttrA);
- An installation label (AttrB);
- An access right profile (AttrC); or
- A default installation indicator (AttrD).

16. The method according to claim 15, wherein the access right profile (AttrC) corresponds to a predefined access right profile and/or to a list of access rights on devices or groups of devices attached to a representative entity.
